(19) Europäisches Patentamt
European Patent Office
Office européen des brevets

(11) **EP 4 657 759 A1**

(12) **EUROPEAN PATENT APPLICATION**
published in accordance with Art. 153(4) EPC

(43) Date of publication:
**03.12.2025 Bulletin 2025/49**

(21) Application number: **23923288.7**

(22) Date of filing: **21.02.2023**

(51) International Patent Classification (IPC):
$H04B\ 1/02^{(2006.01)}$      $G01S\ 13/931^{(2020.01)}$

(52) Cooperative Patent Classification (CPC):
**G01S 13/931; H04B 1/02**

(86) International application number:
**PCT/CN2023/077515**

(87) International publication number:
**WO 2024/174104 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518110 (CN)**

(72) Inventors:
• **SONG, Sida**
  **Shenzhen, Guangdong 518129 (CN)**
• **MA, Sha**
  **Shenzhen, Guangdong 518129 (CN)**
• **ZHANG, Hui**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SIGNAL TRANSMITTING METHOD AND RELATED APPARATUS**

(57)    A signal transmission method and an apparatus can be used in the field of autonomous driving, intelligent driving, or self driving. In embodiments of this application, a total available frequency band of a detection apparatus includes N frequency bands with same bandwidths, the N frequency bands respectively correspond to N orientation ranges, and N is an integer greater than 1. When the detection apparatus transmits a signal, a first available frequency band of the signal is determined based on an orientation of the detection apparatus, the signal is transmitted on the first available frequency band, and the first available frequency band is one of the N frequency bands. In this way, detection apparatuses in different orientation ranges use different frequency bands to transmit signals. In this way, selection of a transmission frequency band of a detection apparatus can be standardized, and interference between detection apparatuses can be reduced.

S2601: Determine, based on an orientation of a detection apparatus, a first available frequency band for transmitting a signal

↓

S2602: Transmit a signal on the first available frequency band

FIG. 26

EP 4 657 759 A1

## Description

### TECHNICAL FIELD

This application relates to the field of detection technologies and intelligent driving, and in particular, to a signal transmission method and a related apparatus.

### BACKGROUND

With development of society, intelligent vehicles are gradually entering people's daily life. Sensors play a very important role in assisted driving and autonomous driving of the intelligent vehicles. Various sensors such as a millimeter-wave radar, a lidar, an ultrasonic radar, and a camera installed on vehicles can sense a surrounding environment, identify and track a moving object, and identify a static scenario (such as a lane line or a sign). In short, the sensor can perceive a possible danger in advance, help a driver in a timely manner, and take a necessary avoidance measure, thereby effectively improving driving safety and comfort of the vehicle.

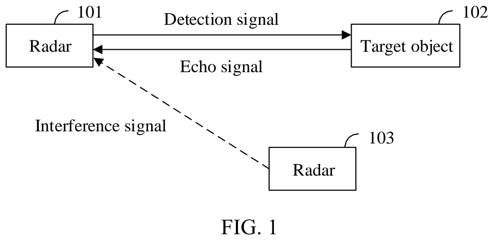

A vehicle-mounted radar is an important part of a vehicle-mounted sensor. Mutual interference between vehicle-mounted radars is a hot issue currently to be resolved. As shown in FIG. 1, a radar 101 may transmit a detection signal to the outside, and receive an echo signal reflected by a target object 102. However, a radar 103 on a front left side of the radar 101 may also transmit a detection signal to the outside. In a process in which the radar 101 receives the echo signal reflected by the target object 102, it is very likely that the radar 101 receives the signal transmitted by the radar 103. Especially when the radar 101 and the radar 103 use a same operating frequency band, the signal transmitted by the radar 103 (that is, an interference signal shown in FIG. 1) causes severe interference to an original echo of the radar 101, thereby reducing detection efficiency and accuracy of the radar 101. For a vehicle, if an interference signal causes a false alarm, an autonomous driving vehicle (or an intelligent assisted driving vehicle) slows down or brakes abruptly when there is no object in front of the vehicle, thereby reducing driving comfort. If an interference signal causes missing detection, when there is an object in front of the vehicle, the autonomous driving vehicle (or the intelligent assisted driving vehicle) mistakenly considers that there is no object in front of the vehicle, and does not slow down or brake, causing a traffic accident and reducing driving safety of the vehicle.

With widespread use of vehicle-mounted radars, mutual interference between vehicle-mounted radars becomes more serious. Mutual interference greatly reduces detection accuracy or increases a false alarm probability, thereby causing non-negligible impact on driving safety or comfort of vehicles.

## SUMMARY

Embodiments of this application provide a signal transmission method and a related apparatus, to reduce interference between detection apparatuses.

**According to a first aspect,** an embodiment of this application provides a signal transmission method, including:

determining, based on an orientation of a detection apparatus, a first available frequency band for transmitting a signal by the detection apparatus, where the first available frequency band is one of N frequency bands of a total available frequency band of the detection apparatus, the N frequency bands respectively correspond to N orientation ranges, and N is an integer greater than 1; and
transmitting a signal on the first available frequency band.

In this embodiment of this application, different orientation ranges respectively correspond to different frequency bands. Therefore, a specific to-be-used frequency band may be determined based on an orientation range of the detection apparatus. This facilitates standardization of frequency band selection and division. Detection apparatuses with different orientation ranges use different frequency bands to transmit signals, thereby significantly reducing or avoiding interference between detection apparatuses with opposite orientations, improving detection accuracy, reducing a false alarm probability, and improving detection performance of the detection apparatuses.

**In a possible implementation of the first aspect,** a distribution status of the N frequency bands is related to a transmission bandwidth requirement range of the detection apparatus. The distribution status herein includes whether the N frequency bands overlap, whether sizes of the N frequency bands are uniform, whether a spacing exists between the N frequency bands, and the like.

A transmission bandwidth requirement of the detection apparatus indicates a frequency bandwidth required by the detection apparatus. For example, the transmission bandwidth requirement of the detection apparatus is equal to an operating bandwidth of the detection apparatus. For example, if the operating bandwidth of the detection apparatus is 400 MHz, the transmission bandwidth requirement may be 400 MHz. For another example, the transmission bandwidth requirement of the detection apparatus may be greater than the operating bandwidth of the detection apparatus. For example, the bandwidth requirement of the detection apparatus is determined based on the operating bandwidth of the detection apparatus and a redundant bandwidth, and the redundant bandwidth may enable the detection apparatus to have higher flexibility in selecting an operating frequency band.

In another possible implementation of the first aspect, bandwidths of the N frequency bands are the same. In this way, the detection apparatus may have a same share of resources when facing each orientation range, thereby avoiding serious interference caused by resources in a specific direction range. It should be understood that the same herein may not be absolute the same. For example, a difference between bandwidths of any two frequency bands of the N frequency bands is relatively small, for example, does not exceed 1/N of the total available frequency band or does not exceed 10 MHz.

In another possible implementation of the first aspect, the N frequency bands overlap. Optionally, that a distribution status of the N frequency bands is related to a transmission bandwidth requirement range of the detection apparatus includes: when the transmission bandwidth requirement range of the detection apparatus is greater than 1/N of the total available frequency band of the detection apparatus, the N frequency bands overlap.

In the foregoing implementation, it is allowed that frequency bands overlap, so that a bandwidth of a frequency band corresponding to each direction range is large, thereby satisfying a requirement of a large-bandwidth detection apparatus. In addition, detection apparatuses with different bandwidth requirements may select first available frequency bands from the total available frequency band based on characteristics of the detection apparatuses, thereby reducing interference between the detection apparatuses.

In a possible case, when N=4, the total available frequency band is 3 GHz, and the bandwidth requirement of the detection apparatus is 1 GHz (in this case, the transmission bandwidth requirement range is greater than 1/N of the total available frequency band of the detection apparatus). If it is not allowed that frequency bands overlap, each of the four frequency bands can occupy only a bandwidth of 0.75 GHz. This cannot satisfy a bandwidth requirement of the detection apparatus.

However, in this embodiment of this application, because it is allowed that frequency bands overlap, each of the four frequency bands can occupy a bandwidth of 1 GHz. For example, in this case, a frequency range of a 1$^{st}$ frequency band is 77 GHz to 78 GHz; a frequency range of a 2$^{nd}$ frequency band is 77.667 GHz (using an example in which a number is accurate to three decimal places) to 78.667 GHz; a frequency range of a 3$^{rd}$ frequency band is 78.333 GHz to 79.333 GHz; and a frequency range of a 4$^{th}$ frequency band is 79 GHz to 80 GHz. Any two adjacent frequency bands overlap by a frequency range of 0.033 GHz.

In some scenarios, the bandwidth requirement range of the detection apparatus may be greater than the operating bandwidth of the detection apparatus. In this case, the detection apparatus may select a part of frequency band from the frequency band to transmit a signal, so that the detection apparatus has more flexible selection space. In addition, when a bandwidth of each frequency band is large, and a signal is transmitted, with reference to an interference sensing technology, a frequency range with relatively small interference in a frequency band may be selected to transmit a signal, to reduce or avoid signal interference, improve detection accuracy, and reduce a missing detection rate and a false alarm rate.

In a possible implementation of the first aspect, that the N frequency bands overlap includes: an overlapping range exists between edge parts of any two adjacent frequency bands in the N frequency bands.

In another possible implementation of the first aspect, when the transmission bandwidth requirement range of the detection apparatus is less than 1/N of the total available frequency band of the detection apparatus,

the N frequency bands do not overlap.

In the foregoing implementation, a width of a frequency band in each direction range may be greater than, or greater than or equal to the transmission bandwidth requirement of the detection apparatus, to facilitate standardization of frequency band division and avoid a case in which an original frequency band allocation manner is disturbed because some detection apparatuses have relatively small bandwidth requirements. In addition, when transmitting a signal, the detection apparatus may select a part of frequency range from the frequency band to transmit the signal, so that selection of the operating bandwidth is more flexible.

In another possible implementation of the first aspect, the total available frequency band includes M frequency sub-bands, the M frequency sub-bands do not overlap, M is an integer, and M>N.

Each of the N frequency bands occupies K consecutive frequency sub-bands of the M frequency sub-bands. Frequency spacings between center frequencies of the N frequency bands are the same.

Further, the M frequency sub-bands are adjacently arranged, that is, the M frequency sub-bands are connected end to end.

In the foregoing implementation, a transmission frequency band of a first detection apparatus can be standardized by using the M frequency sub-bands obtained through division, thereby avoiding randomization.

In another possible implementation of the first aspect, K=M-N+1, and an overlapping range of any two adjacent frequency bands of the N frequency bands is M-N frequency sub-bands.

In another possible implementation of the first aspect, M, N, the transmission bandwidth requirement range $B_w$ of the detection apparatus, and the total available frequency band $B_{band}$ of the detection apparatus satisfy the following formula:

$$\frac{M-N}{M-1} B_{band} < B_w \leq \frac{M-N+1}{M} B_{band}.$$

**In another possible implementation of the first aspect,** a sum of the N orientation ranges is 360°.

**In another possible implementation of the first aspect,** N=4, and each of the four orientation ranges occupies 90°.

**In another possible implementation of the first aspect,** the N orientation ranges are obtained through division by using four basic bearings as boundaries, and the four basic bearings are east, south, west, and north.

This implementation satisfies a requirement of a detection apparatus moving on a specific plane. For example, an orientation of a detection apparatus installed on a vehicle usually changes on a plane. Therefore, division performed by using four basic bearings as boundaries helps reduce interference between detection apparatuses installed on traveling devices on a plane (for example, a ground or a horizontal plane), for example, reduce interference between vehicle-mounted radars, interference between intersection radars, or interference between radars installed on logistics robots.

**In another possible implementation of the first aspect,** N=8, a sum of the N orientation ranges is three-dimensional steering space, the N orientation ranges are eight orientation ranges obtained by dividing the three-dimensional steering interval by using six basic bearings as boundaries, and the six basic bearings are east, south, west, north, up, and down.

Optionally, the three-dimensional steering space is, for example, 360° in a horizontal direction and 180° in a vertical direction.

This implementation satisfies a requirement of a detection apparatus moving in three-dimensional space. For example, an orientation of a detection apparatus installed on an unmanned aerial vehicle, an aircraft, or a submarine usually changes in the three-dimensional space. The foregoing implementation helps reduce interference between detection apparatuses installed on traveling devices in the three-dimensional space.

**In another possible implementation of the first aspect,** in the N orientation ranges, center frequencies of frequency bands corresponding to N/2 orientation ranges that are passed through in a clockwise direction starting from a first orientation sequentially change.

Center frequencies of frequency bands corresponding to N/2 orientation ranges that are passed through in an anticlockwise direction starting from the first orientation sequentially change.

The sequentially changing is sequentially ascending or sequentially descending.

In this implementation, there is a frequency band difference between directions of opposite orientations, and a frequency band difference between adjacent orientation ranges can be reduced. In this way, interference to the detection apparatus is reduced or avoided, and frequency band switching efficiency is also improved.

**In another possible implementation of the**

**first aspect,** in the N orientation ranges, center frequencies of frequency bands corresponding to the N orientation ranges that are passed through in a clockwise direction starting from a first orientation sequentially change, and the sequentially changing is sequentially ascending or sequentially descending.

In this implementation, there is a frequency band difference between orientation ranges with opposite directions, and the differences are relatively uniform, to reduce or avoid interference to the detection apparatus.

**In another possible implementation of the first aspect,** the transmitting a signal on the first available frequency band includes:

transmitting the detection signal on a first frequency range, where the first frequency band is included in the first available frequency band.

In this implementation, the detection apparatus may select a part of frequency range from the first available frequency band to transmit a signal, thereby improving flexibility of selecting the operating frequency band of the detection apparatus.

Optionally, interference of the first frequency range is less than interference in a frequency range of a non-first frequency range in the first available frequency band. This solution can further reduce interference to the detection apparatus and improve detection accuracy.

Optionally, the first frequency range is a frequency range away from the first frequency band in the first available frequency band, the first frequency band is a frequency band corresponding to a first orientation range in the N orientations, and a reverse direction of the orientation of the detection apparatus falls within the first orientation range. This solution can further reduce the frequency band difference between orientation ranges with opposite directions, reduce the interference between detection apparatuses, and improve detection accuracy.

**In another possible implementation of the first aspect,** the method further includes:

determining, based on the orientation of the detection apparatus, a first available time period for transmitting a signal by the detection apparatus, where the first available time period is one of S time periods of a total available time period of the detection apparatus, S≤N, and one of the S time periods corresponds to at least one of the N orientation ranges.

The transmitting a signal on the first available frequency band includes:
transmitting the signal on the first available frequency band in the first available time period.

In the foregoing implementation, selection of a transmission time period of the detection apparatus can be standardized, so that detection apparatuses with different orientation ranges use different time periods to transmit signals, thereby further reducing interference between the detection apparatuses.

**In another possible implementation of the first aspect,** when a transmission time width requirement range of the detection apparatus is greater than 1/S of the total available time period of the detection apparatus, the S time periods overlap; or

when a transmission time width requirement range of the detection apparatus is less than 1/S of the total available time period of the detection apparatus, the S time periods do not overlap.

**In another possible implementation of the first aspect,** the N orientation ranges include a second orientation range and a third orientation range, a direction of the first orientation range is opposite to a direction of the second orientation range, and a resource difference between the second orientation range and the third orientation range is greater than a first threshold.

The second orientation range corresponds to a second frequency band and a first time period. The third orientation range corresponds to a third frequency band and a second time period. The resource difference is related to a difference between the first frequency band and the third frequency band and a difference between the first time period and the second time period.

The second frequency band and the third frequency band belong to the N frequency bands. The first time period and the second time period belong to the S time periods.

In the foregoing implementation, a difference between resources occupied by signals in opposite directions may be further increased by using a time domain difference and a frequency difference. This helps reduce mutual interference between detection apparatuses.

**In another possible implementation of the first aspect,** the resource difference between the second orientation range and the third orientation range is greater than a difference of X units, X is an integer, and X≥2.

The N frequency bands are arranged according to a change order of the center frequencies of the N frequency bands. A difference between an $i^{th}$ frequency band and a $j^{th}$ frequency band is (j-i) units, where i and j are both integers greater than 0, and j≥i.

The S time periods are arranged according to a change order of center moments of the S time periods. A difference between an $h^{th}$ time period and an $l^{th}$ time period satisfies the following formula:

$$\Delta t = min[(l-h),(h+S-l)],$$

where h and l are both integers greater than 0, and l≥h.

**In another possible implementation of the first aspect,** the method further includes:
determining, based on the orientation of the detection apparatus, a first available polarization direction range for transmitting a signal by the detection apparatus.

The first available polarization direction range is one of P polarization direction ranges of a total available polarization direction range of the detection apparatus, P≤N, and one of the P polarization direction ranges corresponds to at least one of the N orientation ranges.

The transmitting a signal on the first available frequency band includes:
transmitting the signal on the first available frequency band in the first available polarization direction range.

In the foregoing implementation, selection of the polarization direction range of the detection apparatus can be standardized, so that detection apparatuses with different orientation ranges use different polarization direction ranges to transmit signals, thereby further reducing the interference between detection apparatuses.

**In another possible implementation of the first aspect,** the orientation of the detection apparatus belongs to a fourth orientation range in the N orientation ranges.

The method further includes:

determining, based on a current orientation of the detection apparatus, a second available frequency band for transmitting a signal by the detection apparatus, if an offset of the orientation of the detection apparatus relative to the fourth orientation range is greater than an offset threshold; and
transmitting a signal on the second available frequency band.

By setting the offset threshold, frequency of frequency band switching can be reduced, thereby improving system stability.

**In another possible implementation of the first aspect,** the determining, based on a current orientation of the detection apparatus, a second available frequency band for transmitting a signal by the detection apparatus, if an offset of the orientation of the detection apparatus relative to the fourth orientation range is greater than an offset threshold includes:
determining, based on the current orientation of the detection apparatus, the second available frequency band for transmitting a signal by the detection apparatus, if the offset of the orientation of the detection apparatus relative to the fourth orientation range is greater than the offset threshold and a duration is greater than a time threshold.

By setting the offset threshold and the time threshold, frequency of frequency band switching can be further reduced, thereby improving system stability.

**According to a second aspect,** an embodiment of this application provides a signal transmission apparatus. The signal transmission apparatus includes a processing module and a transmitting module. The signal transmission apparatus is configured to implement the signal transmission method described in the first aspect or any one of the possible implementations of the first aspect.

According to a third aspect, an embodiment of this application provides a chip. The chip includes a processor. When the processor invokes a computer program or instructions, the method described in any implementation of the first aspect is performed. In other words, the processor is configured to implement the method described in any one implementation of the first aspect.

Optionally, the chip further includes a communication interface. The communication interface is configured to receive and/or send data, and/or the communication interface is configured to provide input and/or output for the processor.

Optionally, the chip may further include a memory. The memory may be configured to store the computer program or the instructions. Further, the memory may be located outside the processor, or may be integrated with the memory.

According to a fourth aspect, an embodiment of this application further provides a detection apparatus. The detection apparatus includes the signal transmission apparatus according to the second aspect and/or includes the chip according to the third aspect.

Optionally, the detection apparatus further includes a receiving module, and the receiving module is configured to receive an echo corresponding to a transmitted signal.

According to a fifth aspect, an embodiment of this application further provides a terminal. The terminal includes the transmitting apparatus in the second aspect or includes the detection apparatus described in the third aspect.

Optionally, the terminal may be an intelligent terminal or transportation means such as a vehicle, an unmanned aerial vehicle, or a robot.

According to a sixth aspect, an embodiment of this application provides a computer-readable storage medium. The computer-readable storage medium is configured to store instructions or a computer program. When the instructions or the computer program is executed, the method described in any implementation of the first aspect is implemented.

According to a seventh aspect, this application provides a computer program product. The computer program product includes computer instructions or a computer program.

When the instructions or the computer program is executed, the method described in any implementation of the first aspect is implemented.

Optionally, the computer program product may be a software installation package or an image package. When the foregoing method needs to be used, the computer program product may be downloaded, and the computer program product is executed on a computing device.

For beneficial effects of the technical solutions provided in the second aspect to the seventh aspect of this application, refer to the beneficial effects of the technical solutions in the first aspect. Details are not described herein again.

## BRIEF DESCRIPTION OF DRAWINGS

The following briefly describes accompanying drawings used in descriptions of embodiments.

FIG. 1 is a diagram of a scenario in which an interference signal exists;
FIG. 2 is a diagram of interference of a vehicle-mounted radar;
FIG. 3 is a diagram of an application scenario according to an embodiment of this application;
FIG. 4 is a diagram of an architecture of a detection apparatus according to an embodiment of this application;
FIG. 5 is a diagram of orientation ranges according to an embodiment of this application;
FIG. 6 is another diagram of orientation ranges according to an embodiment of this application;
FIG. 7 is another diagram of orientation ranges according to an embodiment of this application;
FIG. 8 is another diagram of orientation ranges according to an embodiment of this application;
FIG. 9 is another diagram of orientation ranges according to an embodiment of this application;
FIG. 10 is a diagram of distribution of frequency bands according to an embodiment of this application;
FIG. 11 is another diagram of distribution of frequency bands according to an embodiment of this application;
FIG. 12 is a diagram of a frequency band division manner according to an embodiment of this application;
FIG. 13 is a diagram of another frequency band division manner according to an embodiment of this application;
FIG. 14 is a diagram of a correspondence between a frequency band and an orientation range according to an embodiment of this application;
FIG. 15 is a diagram of a correspondence between a frequency band and an orientation range according to an embodiment of this application;
FIG. 16 is a diagram of another correspondence between a frequency band and an orientation range according to an embodiment of this application;
FIG. 17 is a diagram of another correspondence between a frequency band and an orientation range according to an embodiment of this application;
FIG. 18 is a diagram of distribution of time periods according to an embodiment of this application;
FIG. 19 is another diagram of distribution of time periods according to an embodiment of this application;
FIG. 20 is a diagram of a correspondence between a frequency band and an orientation range according to an embodiment of this application;
FIG. 21 is a diagram of a correspondence among a frequency band, a time period, and an orientation range according to an embodiment of this application;

FIG. 22 is a diagram of another possible correspondence among a frequency band, a time period, and an orientation range according to an embodiment of this application;

FIG. 23 is a diagram of distribution of polarization direction ranges according to an embodiment of this application;

FIG. 24 is a diagram of a correspondence between a frequency band and an orientation range according to an embodiment of this application;

FIG. 25 is a diagram of a correspondence among a frequency band, a polarization direction range, and an orientation range according to an embodiment of this application;

FIG. 26 is a flowchart of a signal transmission method according to an embodiment of this application;

FIG. 27 is a diagram of a correspondence between a frequency band and an orientation range according to an embodiment of this application;

FIG. 28 is a diagram of a scenario of a signal transmission method according to an embodiment of this application;

FIG. 29 is a diagram of a correspondence between a frequency band and an orientation range according to an embodiment of this application;

FIG. 30 is a diagram of a frequency band switching condition according to an embodiment of this application;

FIG. 31 is a flowchart of another signal transmission method according to an embodiment of this application;

FIG. 32 is a diagram of a correspondence between a frequency band and an orientation range according to an embodiment of this application;

FIG. 33 is a diagram of a scenario of a signal transmission method according to an embodiment of this application;

FIG. 34 is a flowchart of another signal transmission method according to an embodiment of this application;

FIG. 35 is a diagram of a correspondence between a frequency band and an orientation range according to an embodiment of this application;

FIG. 36 is a diagram of a structure of another signal transmission apparatus according to an embodiment of this application; and

FIG. 37 is a diagram of a structure of another signal transmission apparatus according to an embodiment of this application.

## DESCRIPTION OF EMBODIMENTS

For ease of understanding, some concepts related to embodiments of this application are described for reference by using examples below.

1. Detection apparatus: The detection apparatus can transmit a signal for detection (for example, ranging), and includes but is not limited to a radar or a lidar. The radar may be a millimeter-wave radar, a centimeter-wave radar, or the like. In some scenarios, an apparatus (a fusion detection apparatus) that integrates both a radar and a camera may also transmit a signal, and the fusion detection apparatus also falls within the scope of the detection apparatus in this application.

2. Operating bandwidth of the detection apparatus: a bandwidth occupied by a waveform of a signal transmitted by the detection apparatus.

3. Interference sensing (interference sensing): A receiving module receives an electromagnetic wave in space. A received signal is processed to obtain a sensing result. The sensing result may reflect an interference condition in current space, for example, a frequency of an interference signal, a strength of the interference signal, and a time domain resource occupied by the interference signal. For example, a fast interference sensing and avoidance (Fast Interference Sensing and Avoidance, FISA) technology is an interference sensing technology in which an interference condition of an operating frequency/time resource (Operating Frequency/Time Resource, OFTR) is first obtained through interference sensing, and then an appropriate OFTR is selected based on the status to operate, so that the detection apparatus can adapt to a change in a complex electromagnetic environment.

With development of information technologies, detection technologies develop rapidly, and various detection apparatuses bring great convenience to people's life and travel. For example, an advanced driver-assistance system (advanced driver-assistance system, ADAS) plays a very important role in an intelligent vehicle. The advanced driver-assistance system uses a detection apparatus mounted on the vehicle to detect, in a traveling process of the vehicle, an ambient environment, collect data, identify static or moving objects, and perform systematic calculation and analysis based on map data, so that a driver is aware of potential hazards in advance, thereby effectively improving driving comfort and safety of the vehicle. It is not difficult to learn that the detection apparatus is to become an indispensable apparatus in an intelligence development process of a terminal (such as a vehicle or a logistics robot). The detection apparatus is often referred to as an "eye" for the terminal to sense an environment. For example, the vehicle-mounted radar is an important part of the vehicle-mounted sensor.

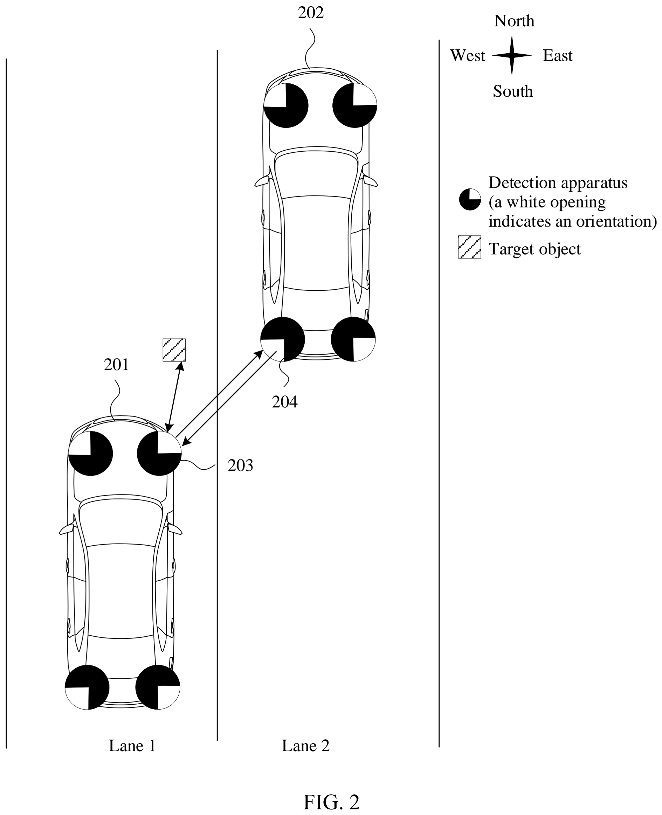

However, with wide application of detection apparatuses, mutual signal interference between the detection apparatuses quickly becomes a problem to both manufacturers and consumers. For example, with reference to FIG. 2, FIG. 2 is a diagram of interference of a vehicle-mounted radar. Detection apparatuses (a black circle represents detection, and white represents an orientation of the detection apparatus) are disposed on a front left side, a front right side, a rear left side, and a rear right side of each of a vehicle 201 and a vehicle 202. Orientations of a detection apparatus 203 on the vehicle 201 and a detection apparatus 204 on the vehicle 202 are opposite. Therefore, a signal transmitted by the detection apparatus 204 is very likely to interfere with detection performed by the detection apparatus 203. Similarly, a signal transmitted by the detection apparatus 203 is also very likely to interfere with detection performed by the detection apparatus 204.

For example, the detection apparatus 203 may receive an echo from a target object 1 in a time of receiving an echo signal, to obtain an actual echo. After analysis and processing are performed on the actual echo, the target object 1 in front of the detection apparatus 203 may be detected. If the detection apparatus 203 receives a signal (an interference signal) transmitted by the detection apparatus 204, after the signal is processed, the detection apparatus 203 (or the vehicle 201) may consider that there is a "target object 2" in front of the detection apparatus 203 (the name is merely an example). However, actually, the "target object 2" does not exist. In other words, due to mutual interference, the detection apparatus 203 obtains a false detection result. This false detection result may cause a false alarm. As a result, the vehicle 201 swerves to avoid, decelerates, or brakes abruptly when there is no object in front of the vehicle 201, thereby reducing driving comfort.

For another example, the signal transmitted by the detection apparatus 204 may cover an actual echo (in other words, submerge the actual echo), causing missing detection of the signal. For example, the detection apparatus 203 receives, in a time of receiving the echo signal, the echo (the actual echo) from the target object 1 and the signal (the interference signal) transmitted by the detection apparatus 204. The interference signal may make the actual echo not obvious enough or even cover the actual echo, which makes it difficult to detect the target object and increases a possibility of missing detection. After missing detection occurs, when there is an object in front of the vehicle, the autonomous driving vehicle mistakenly considers that there is no object in front of the vehicle, and does not slow down, avoid, or brake, causing a traffic accident, reducing driving safety of the vehicle, and endanger personal safety of a passenger.

In short, mutual interference between detection apparatuses greatly reduces detection accuracy or increases a false alarm probability, thereby causing non-negligible impact on driving safety or comfort of vehicles.

In view of this, embodiments of this application provide a signal transmission method and apparatus. In this embodiment of this application, a total available frequency band of the detection apparatus includes a plurality of (for example, N, where N is an integer and N>0) frequency bands with same bandwidths, and the N frequency bands respectively correspond to a plurality of (for example, N) orientation ranges. When the detection apparatus transmits a signal, a first available frequency band of the signal is determined based on an orientation of the detection apparatus, the signal is transmitted on the first available frequency band, and the first available frequency band is one of the N frequency bands. In this way, selection of a transmission frequency band of the detection apparatus can be standardized, so that detection apparatuses with different orientation ranges use different frequency bands to transmit signals, thereby reducing interference between the detection apparatuses.

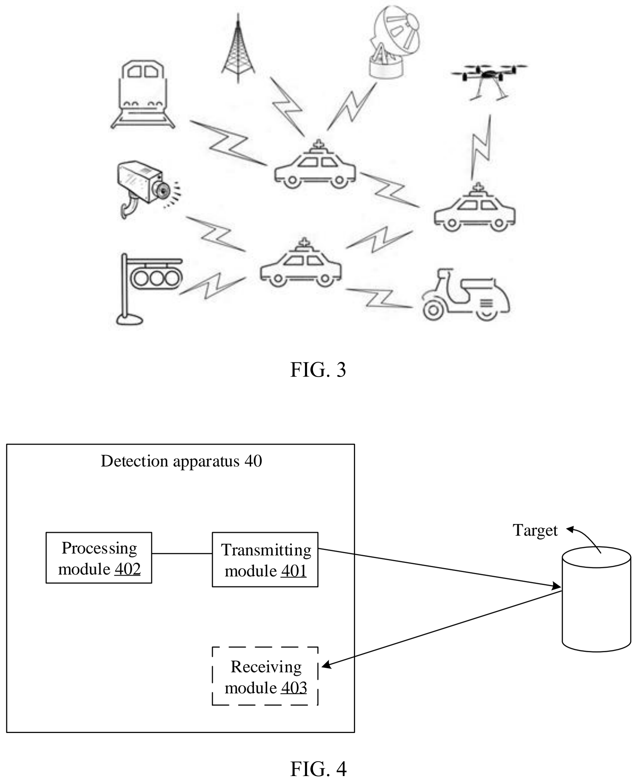

FIG. 3 is a diagram of a possible application scenario according to an embodiment of this application. The foregoing application scenario may be self-driving, autonomous driving, intelligent driving, connected driving, or the like. A detection apparatus may be installed on a motor vehicle (for example, a driverless vehicle, an intelligent vehicle, an electric vehicle, or a digital vehicle), an unmanned aerial vehicle, a rail car, a bicycle, a signal light, a velocity measurement apparatus or a network device (for example, a base station or a terminal device in various systems), or the like. This embodiment of this application is applicable to a detection apparatus between vehicles, a detection apparatus between a vehicle and another apparatus such as an unmanned aerial vehicle, or a detection apparatus between other apparatuses. In addition, the detection apparatus may be installed on a mobile device. For example, the detection apparatus is installed on a vehicle as a vehicle-mounted detection apparatus (for example, a vehicle-mounted radar). Alternatively, the detection apparatus may also be installed on a fixed device, for example, installed on a device such as a roadside unit (roadside unit, RSU). An installation position, a function, and the like of the detection apparatus are not limited in this embodiment of this application.

The following describes embodiments of this application with reference to the accompanying drawings.

The following describes a system architecture in embodiments of this application. It should be noted that the system architecture and a service scenario described in this application are intended to describe technical solutions in this application more clearly, and do not constitute a limitation on the technical solutions provided in this application. It should be understood that, with evolution of the system architecture and emergence of a new service scenario, the technical solutions provided in this application are also applicable to similar technical problems.

Refer to FIG. 4. FIG. 4 is a diagram of an architecture of a detection apparatus according to an embodiment of this application. The detection apparatus 40 includes a transmitting module 401 and a processing module 402.

The transmitting module 401 is configured to transmit a signal. In a possible example, the transmitting module 401 may include a signal transmitter, a modulator, and a transmit antenna, and optionally further include an amplifier and the like. The signal generator (such as a voltage-controlled oscillator) may generate an electromagnetic-wave signal (also referred to as a radar signal waveform). For example, for a radar using an FMCW modulation scheme, a signal transmitter may generate a sawtooth wave or a triangular wave. A waveform of the generated electromagnetic-wave signal undergoes frequency conversion and modulation processing, and is modulated to a specific frequency band (for example, between 77 GHz and 78 GHz) and is radiated to space by using a transmitting antenna.

The processing module 402 has a computing capability. For example, the processing module 402 may be connected to the transmitting module 401, and the processing module determines an available frequency band for transmitting a signal and provides information about the available frequency band to the transmitting module 401. Correspondingly, the transmitting module receives the available frequency band, and transmits a signal on the available frequency band. The information about the available frequency band indicates the available frequency band, for example, includes information such as a number of the available frequency band, a center frequency of the available frequency band, a bandwidth of the available frequency band, and a start frequency and an end frequency of the available frequency band.

Optionally, the processing module 402 may be implemented by using hardware or software. For example, the processing module 402 may be implemented by using a general-purpose processor, for example, a central processing unit (Central Processing Unit, CPU) or a microprocessor. Alternatively, the processing module 402 may be implemented in a form of a hardware circuit, and functions that are of a part or all of units and that are completed by the processing module 402 are implemented by designing the hardware circuit. For example, in an implementation, the hardware circuit is an application-specific integrated circuit (application-specific integrated circuit, ASIC), and functions of a part or all of the foregoing units are implemented by designing a logical relationship between elements in the circuit. For another example, in another implementation, the hardware circuit may be implemented by using a programmable logic device (programmable logic device, PLD). For example, a field-programmable gate array (Field-Programmable Gate Array, FPGA) may include a large quantity of logic gate circuits, and a connection relationship between the logic gate circuits is configured by using a configuration file, to implement functions of a part or all of the foregoing units.

Optionally, the detection apparatus 40 may further include a receiving module 403 (shown by using a dashed line in the figure). The receiving module 403 is configured to receive an electromagnetic-wave signal.

Further, the received signal may be output as detection data, or the received signal is processed to obtain detection data that is then output. The detection data may indicate related information of a target, for example, information such as a distance, a speed, an angle, and an emissivity of the target.

In a possible example, the receiving module 403 may include a receiving antenna. The electromagnetic-wave signal radiated by the transmitting antenna is transmitted to the target and then reflected to space, and then received by the receiving antenna. Frequency mixing may be performed on a signal received by the receiving antenna and a reference signal. The reference signal may usually be the foregoing generated electromagnetic-wave signal. After subsequent processing (for example, filtering, conversion, and amplification) is performed on an output of the frequency mixing, information about a distance, a speed, and an angle of the target may be obtained. In addition, processing such as clustering and/or tracking may be performed on the obtained information, to further obtain information such as a track, a size, and a type of the target.

In some scenarios, the detection apparatus 40 may be a millimeter-wave radar, and an electromagnetic wave transmitted by the detection apparatus 40 is a millimeter wave. Alternatively, the detection apparatus 40 may be a centimeter-wave radar, and an electromagnetic wave transmitted by the detection apparatus 40 is a centimeter wave.

In some scenarios, the detection apparatus 40 may be a lidar, a transmitting module of the detection apparatus 40 may include a laser or a silicon photonic chip, and an electromagnetic wave transmitted by the detection apparatus 40 is light.

When performing detection, the detection apparatus may perform detection in a specific direction. For example, the detection apparatus 203 shown in FIG. 2 faces a northeast direction, and the detection apparatus 204 faces a southwest direction. Orientations of the detection apparatus at different moments may be different. For example, the orientation of the detection apparatus is based on a geodetic coordinate system. When the detection apparatus is installed on a vehicle, the orientation of the detection apparatus changes due to steering of the vehicle. For another example, the detection apparatus may be installed on a swivel table, and the swivel table rotates to change the orientation of the detection apparatus. For another example, a scanner or a mechanical rotation component is disposed in the detection apparatus, so that the detection apparatus performs detection in different directions.

The following describes an orientation and an orientation range in embodiments of this application. The orientation indicates a bearing or a direction, for example, a disposing direction of the detection apparatus, a direction of a signal transmitted by the detection apparatus, or a direction of a center of a field of view of the detection apparatus.

The orientation is usually defined with reference to a fixed bearing (that is, a basic bearing). The fixed bearing is usually predefined or pre-specified, or is predesigned by a vendor or a developer.

For example, the fixed bearing may be based on the geodetic coordinate system. East is a direction of the earth's rotation, west is an opposite direction of the earth's rotation, north is a direction toward the north pole, and south is a direction toward the south pole. Certainly, east, west, north, and south are basic bearings on a ground plane. In some scenarios, the basic bearing may further include up and down, where a direction pointing to the earth's core is down, and a direction opposite to the earth's core is up. Some embodiments of this application are described by using an example in which the fixed bearing is based on the geodetic coordinate system. This application is also applicable to a case in which the fixed bearing is based on another coordinate system.

For another example, the fixed bearing may be based on a road coordinate system. A reference line direction of a road is classified into a positive direction along a reference line or a negative direction opposite to the reference line direction. A direction perpendicular to the reference line of the road is left or right. Positive, negative, left, and right can be considered as basic bearings of road directions.

For another example, the fixed bearing may be based on a reference vehicle coordinate system. A center of a rear axle or a center of the vehicle is used as an origin. A direction of a vehicle head is front. A direction of a vehicle tail is rear. Left and right are determined with reference to front. Front, rear, left, and right can be considered as basic bearings of vehicle directions.

In some implementations, the orientation of the detection apparatus may change in steering space, and is predefined or pre-specified. For example, a degree of freedom may be 360°, that is, an entire plane, for example, 360° formed by east, west, north, and south. For another example, a degree of freedom may be three-dimensional, for example, including 360° in a horizontal direction and 180° in a vertical direction, for example, steering space formed by east, west, north, south, up, and down.

The orientation range is a range between one orientation and another orientation in the steering space. Space may be divided into one or more orientation ranges. A quantity of orientation ranges may be predefined or preconfigured. For ease of description, N1 orientation ranges are used as an example for description, where N1 is an integer greater than 0. Optionally, N1>1. At a specific moment, the orientation of the detection apparatus may fall within any one of the N1 orientation ranges.

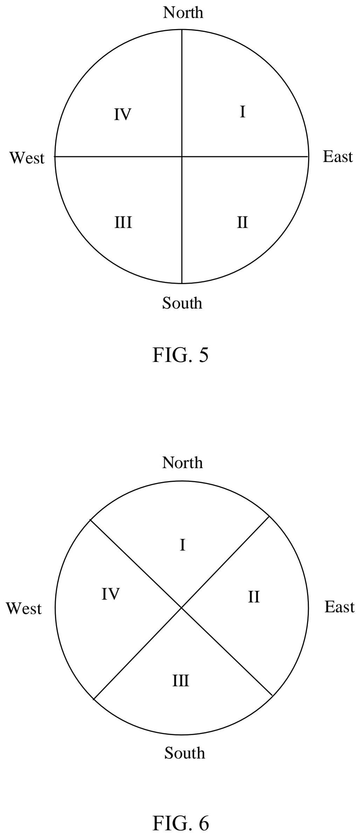

Refer to FIG. 5. FIG. 5 is a diagram of orientation ranges according to an embodiment of this application. For example, N1=4. Four orientation ranges are respectively represented by I, II, III, and IV. A sum of the four orientation ranges is 360°. Each orientation range occupies 90°. It should be understood that FIG. 5 shows four orientation ranges obtained through division by using basic bearings as boundaries. In a specific implementation process, other bearings may also be used as boundaries. As shown in FIG. 6, four orientation ranges are obtained by using angular bisectors of basic bearings as boundaries.

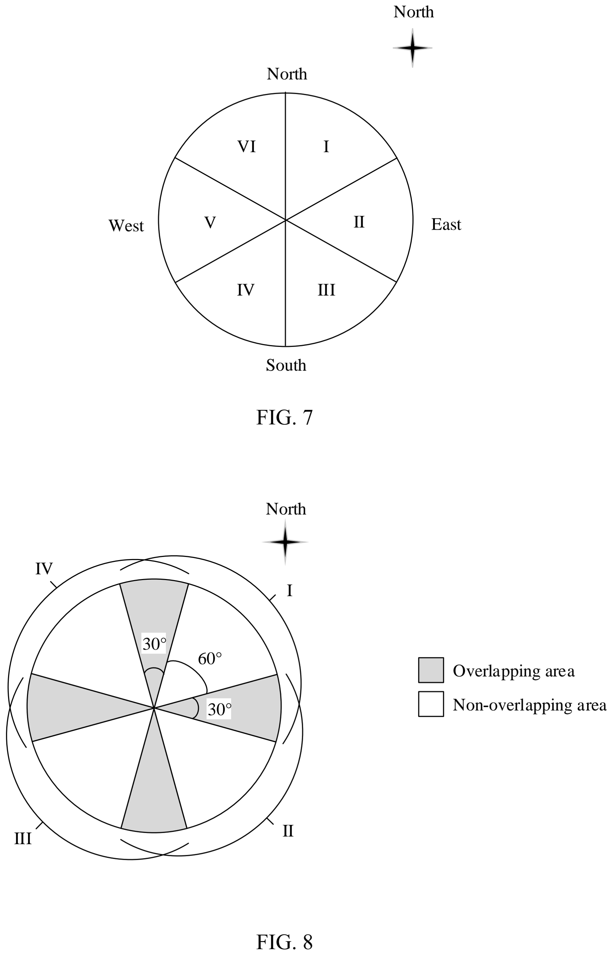

The foregoing uses four orientation ranges (N1=4) as an example for description. In a specific implementation process, there may be more or fewer orientation ranges. For example, FIG. 7 is another diagram of orientation ranges according to an embodiment of this application. Six orientation ranges shown in FIG. 7 are respectively represented by I, II, III, IV, V, and VI. A sum of angle widths of the six orientation ranges is 360°. Each orientation range occupies 60°.

**In the foregoing example, a sum of angle widths of the N1 orientation ranges is an angle width of the steering space.**

In some scenarios, a sum of angle widths of the N1 orientation ranges may be greater than an angle width of the steering space. FIG. 8 is another diagram of orientation ranges according to an embodiment of this application. Each of the N1 orientation ranges occupies 120°. Each orientation range overlaps another orientation range by 60° on two sides each by 30°. The orientation range I is 120° between 15° west of north and 15° south of east. The orientation range II is 120° between 15° north of east and 15° west of south. Other orientation ranges are deduced by analogy. It is not difficult to learn that a sum of angle widths of four orientation ranges is 480° greater than 360°. It should be understood that the angle width (120°) of the orientation range shown in FIG. 8, the overlapping manner (overlapping on two sides), and the width (30°) of the overlapping area are merely examples. There may be other designs in specific implementations.

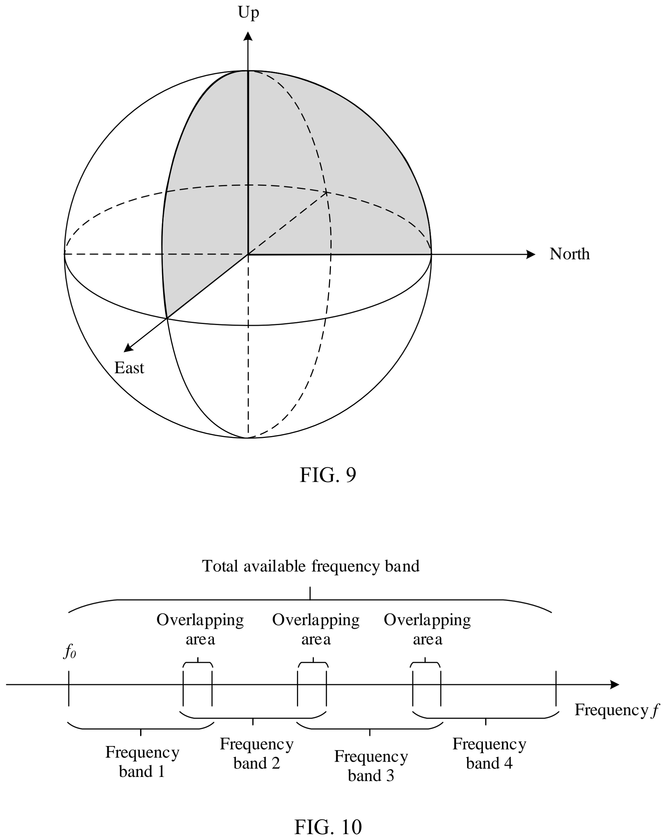

The orientation ranges shown in the foregoing figures are all described by using an example of bearings in two-dimensional space. The following describes orientation ranges in three-dimensional space. Refer to FIG. 9. FIG. 9 is another diagram of orientation ranges according to an embodiment of this application. Steering space includes eight orientation ranges. The eight orientation ranges use six basic bearings (that is, east, south, west, north, up, and down) as boundaries. A sum of angle widths of the eight orientation ranges is 360° in a horizontal direction and 180° in a vertical direction. Optionally, the sum of the angle widths of the eight orientation ranges may also be greater than an angle width of the steering space. For related descriptions, refer to FIG. 7.

The orientation ranges are described above. The following describes a total available frequency band and bandwidth.

The signal transmitted by the detection apparatus is an electromagnetic wave that is usually transmitted on a specific frequency band, for example, a centimeter wave or a millimeter wave. Certainly, a frequency of the signal transmitted by the detection apparatus may also be variable, for example, a frequency-modulated continuous wave.

The total available frequency band (or referred to as a total spectrum) means a frequency range that can be used by the detection apparatus, or a frequency range in which the detection apparatus can operate. In other words, the detection apparatus may select a frequency resource on the total available frequency band for detection. Optionally, a frequency range of the total available frequency band is predefined or pre-specified. In a possible implementation, the total available frequency band may be predefined in an industry standard. The industry standard is not limited herein. For example, the total available frequency band may be 77 GHz to 81 GHz, where GHz herein means gigahertz. For another example, the frequency domain range of the total available frequency band may also be pre-specified in a law or a standard. The specific law or standard is not limited herein.

The total available frequency band includes a plurality of frequency bands. A quantity of frequency bands included in the total available frequency band may be predefined or pre-specified. In some scenarios, the quantity of frequency bands is related to a quantity of orientation ranges. For example, the quantity of frequency bands is equal to the quantity of orientation ranges. For another example, the quantity of frequency bands is in a proportional relationship with the quantity of orientation ranges. For ease of description, the quantity of frequency bands is set to N2, where N2 is an integer and N2>0. Optionally, N2=N1.

There may be a plurality of possible cases in which the total frequency band includes N2 frequency bands. The following lists two possible cases as examples.

Case 1: The N2 frequency bands may overlap. Overlapping means that an overlapping area exists between adjacent frequency sub-bands. As shown in FIG. 10, the N2 (for example, N2 is 4) frequency bands are respectively represented by a frequency band 1 to a frequency band 4. There is a common frequency resource (that is, an overlapping area) between the frequency band 2 and the frequency band 1.

Optionally, sizes of the N2 frequency bands are uniform. In other words, bandwidths of the N2 frequency bands are the same. An entire frequency band range occupied by the N2 frequency bands is the total available frequency band.

In some possible implementations, a sum of bandwidths of the N2 frequency bands is greater than, or greater than or equal to a bandwidth of the total frequency band. For example, when the bandwidths of the N2 frequency bands are the same, $N2B_w > B_{band}$, that is, $B_w > \frac{B_{band}}{N2}$, where $B_w$ is a bandwidth of a frequency band, and $B_{band}$ is the bandwidth of the total available frequency band.

In some possible implementations, values of bandwidths of overlapping areas between the N2 frequency bands are the same. For example, the width $B_{overlap}$ of the overlapping area satisfies the following formula:

$$B_{overlap} = \frac{N2B_w - B_{band}}{N2-1}.$$

With reference to FIG. 10, it is not difficult to learn that, when the N2 frequency bands occupy all of the total available frequency band, a frequency band range of an nth frequency band in the N2 frequency bands is [$f_0$ + (n - 1)$B_w$ - (n - 1)$B_{overlap}$] to ([$f_0$ + n$B_w$ - (n - 1)$B_{overlap}$]). Herein, $f_0$ is a start frequency of the total available frequency band, n is an integer, and 1≤n≤N2. For example, a frequency band range of a 1st frequency band is $f_0$ to ($f_0$ + $B_w$), a frequency band range of a 2nd frequency band is ($f_0$ + $B_w$ - $B_{overlap}$) to ($f_0$ + 2$B_w$ - $B_{overlap}$), and other frequency bands are deduced by analogy. In this case, the N2 frequency bands are uniformly distributed on the total frequency band. In other words, differences between center frequencies of the frequency bands are the same.

For example, when the frequency band range of the total frequency band is 77 GHz to 80.4 GHz, if the quantity of frequency bands is four and the width of the frequency band is 1 GHz, the width of the overlapping area is 0.2 GHz. A frequency band range of a 1st frequency band is 77 GHz to 78 GHz, a frequency band range of a 2nd frequency band is 77.8 GHz to 78.8 GHz, a frequency band range of a 3rd frequency band is 78.6 GHz to 79.6 GHz, and a frequency band range of a 4th frequency band is 79.4 GHz to 80.4 GHz.

It should be noted that FIG. 10 shows an example in which the values of the bandwidths of the overlapping areas between the N2 frequency bands are the same. This application is also applicable to a case in which the bandwidths of the overlapping areas are different.

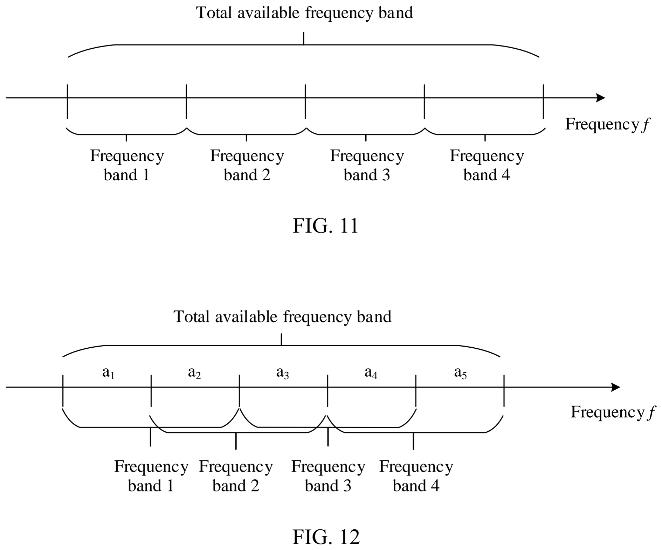

Case 2: As shown in FIG. 11, the N2 frequency bands may not overlap. Nonoverlapping means that the N2 frequency bands do not overlap. In other words, there is no common frequency resource part between the N2 frequency bands. For example, there is no common frequency resource between the frequency band 2 and each of the frequency band 1 and the frequency band 3.

For example, when the frequency band range of the total frequency band is 77 GHz to 81 GHz, if the quantity of frequency bands is four and the width of the frequency band is 1 GHz, a frequency band range of a 1st frequency band is 77 GHz to 78 GHz, a frequency band range of a 2nd frequency band is 78 GHz to 79 GHz, and by analogy, a frequency band range of a 4th frequency band is 80 GHz to 81 GHz. In the foregoing example, sizes of the N2 frequency bands are also uniform.

Optionally, a sum of bandwidths of the N2 frequency bands may be equal to a bandwidth of the total frequency band. In other words, the N2 frequency bands are connected end to end, and there is no gap between any two adjacent frequency bands.

Alternatively, a sum of bandwidths of the N2 frequency bands may be less than a bandwidth of the total frequency band. In this case, there is a gap between two adjacent frequency bands.

The foregoing describes only a possibility that the N2 frequency bands are on the total available frequency band. For ease of understanding, the following describes, by using examples, several possible implementations of obtaining the N2 frequency bands.

In an implementation 1, frequency bandwidths of the N2 frequency bands are related to a transmission bandwidth requirement range of the detection apparatus. A transmission bandwidth requirement of the detection apparatus indicates a frequency bandwidth required by the detection apparatus.

For example, the transmission bandwidth requirement of the detection apparatus is equal to an operating bandwidth of the detection apparatus. For example, if the operating bandwidth of the detection apparatus is 400 MHz, the transmission bandwidth requirement may be 400 MHz.

For another example, the transmission bandwidth requirement of the detection apparatus may be greater than the operating bandwidth of the detection apparatus. For example, the bandwidth requirement of the detection apparatus is determined based on the operating bandwidth of the detection apparatus and a redundant bandwidth, and the redundant bandwidth may enable the detection apparatus to have higher flexibility in selecting an operating frequency band. For example, if the operating bandwidth of the detection apparatus is 800 MHz and the redundant bandwidth of 200 MHz is needed, the transmission bandwidth requirement of the detection apparatus is 1 GHz.

In a possible implementation, a frequency bandwidth of any one of the N2 frequency bands is equal to the transmission bandwidth requirement of the detection apparatus. For example, if the transmission bandwidth requirement is 1 GHz, the frequency bandwidth is 1 GHz. For another example, if the transmission bandwidth requirement is 600 MHz, the frequency bandwidth is 600 GHz.

In a possible implementation, when the transmission bandwidth requirement range of the detection apparatus is greater than, or greater than or equal to the total available frequency band $\frac{1}{N2}$ of the detection apparatus, the frequency bandwidth is equal to the transmission bandwidth requirement of the detection apparatus. For example, N2=4. If the width $B_{band}$ of the total available frequency band of the detection apparatus is 3.4 GHz, and the width of the transmission bandwidth requirement range $B_r$ of the detection apparatus is 1 GHz, because $B_r > \frac{B_{band}}{N2}$ , $B_w = B_r$.

In this case, because $B_w > \frac{B_{band}}{N2}$ , that is, $N2B_w > B_{band}$, the sum of the bandwidths of the N2 frequency bands is greater than the bandwidth of the total available frequency band. Therefore, the N2 frequency bands overlap. In other words, when the transmission bandwidth requirement range of the detection apparatus is greater than, or greater than or equal to the total available frequency band $\frac{1}{N2}$ of the detection apparatus, the N2 frequency bands overlap. For detailed descriptions of overlapping, refer to the descriptions in Case 1 above.

In this implementation, frequency band division is standardized, and frequency band division is avoided from being excessively randomized. In addition, any frequency band can satisfy a large bandwidth required by the detection apparatus, thereby improving detection performance of the detection apparatus.

Optionally, when the transmission bandwidth requirement range of the detection apparatus is less than or equal to, or less than the total available frequency band $\frac{1}{N2}$, the frequency bandwidth is related to the total available bandwidth and N2. For example, when $B_r < \frac{B_{band}}{N2}$ or $B_r \le \frac{B_{band}}{N2}$, $B_w = \frac{B_{band}}{N2}$. In other words, when the transmission bandwidth requirement of the detection apparatus is less than the total available frequency band $\frac{1}{N2}$, the total available frequency band is still used as a division basis to obtain N2 parts through division. In this way, N2 frequency bands are obtained. In this case, a width of each frequency band may be greater than, or greater than or equal to the transmission bandwidth requirement of the detection apparatus, to facilitate standardization of frequency band division and avoid a case in which an original frequency band allocation manner is disturbed because some detection apparatuses have relatively small bandwidth requirements. In addition, when transmitting a signal, the detection apparatus may select a part of frequency range from the frequency band to transmit the signal, so that selection of the operating bandwidth is more flexible.

In an implementation 2, the total available frequency band includes M frequency sub-bands, the M frequency sub-bands do not overlap, and each of the N2 frequency bands occupies K consecutive frequency sub-bands of the M frequency sub-bands. Herein, M is an integer and M>N2, and K is an integer and K>0.

Herein, M may be predefined or pre-specified, or may be calculated based on another parameter (described below). In addition, "consecutive" herein means consecutive in order, and may not indicate consecutive in a frequency band. For example, in some scenarios, the total available frequency band is 77 GHz to 79 GHz and 80 GHz to 81 GHz, and there is a 1 GHz gap. In this case, the frequency sub-bands are not connected end to end due to the 1 GHz gap. However, frequency sub-bands before and after the gap are still considered to be consecutive.

Optionally, the N2 frequency bands are uniformly distributed on the total available frequency band. For example, differences between center frequencies of the N2 frequency bands are uniform. For another example, when the N2 frequency bands have overlapping areas, widths of the overlapping areas of the N2 frequency bands are equal.

In a possible implementation, K=M-N2+1, and an overlapping area of two adjacent frequency bands of the N2 frequency bands is M-N2 frequency sub-bands.

Refer to FIG. 12. FIG. 12 is a diagram of a frequency band division manner according to an embodiment of this application. The total available frequency band includes M (M=5 herein) frequency sub-bands that are respectively represented by $a_1$ to $a_5$. Each of the N2 frequency bands occupies 2 (K=M-N2+1=5-4+1=2) of the M frequency sub-bands. An overlapping range of two adjacent frequency bands is 1 (M-N2=5-4=1). For example, a frequency band 1 includes a frequency sub-band $a_0$ and a frequency sub-band $a_1$, and a frequency band 2 includes a frequency sub-band $a_1$ and a frequency sub-band $a_2$. For other frequency bands, refer to FIG. 12. Optionally, the frequency sub-band $a_1$ is an overlapping area of the frequency band 1 and the frequency band 2.

In a possible implementation, M is determined based on the transmission bandwidth requirement range of the detection apparatus, and M, N2, the transmission bandwidth requirement range $B_w$ of the detection apparatus, and the total available frequency band $B_{band}$ of the detection apparatus satisfy the following formula:

$$\frac{M-N2}{M-1} B_{band} < B_w \leq \frac{M-N2+1}{M} B_{band}.$$

Optionally, the foregoing implementation is implemented in a case in which the transmission bandwidth requirement range of the detection apparatus is greater than, or greater than, or greater than the total available frequency band $\frac{1}{N2}$.

**In another possible implementation, M is predefined.** In this case, this is equivalent to a case in which the total available bandwidth is divided into the M frequency sub-bands based on a granularity, to form a raster-shaped frequency band range. When the N2 frequency bands are determined, start points and end points of the N2 frequency bands are aligned with "rasters". In other words, a start point and an end point of a frequency band fall on boundaries of frequency sub-bands. For example, the M frequency sub-bands may be considered as M raster points, and the detection apparatus may adjust a start point and an end point of each frequency band to boundaries of frequency sub-bands based on the start point and the end point of each of the N2 frequency bands and boundary locations of the M frequency sub-bands. For example, adjustment is performed to boundaries of closest frequency sub-bands, or a quantity of frequency sub-bands included in each frequency band is calculated to determine boundaries of frequency sub-bands for adjustment.

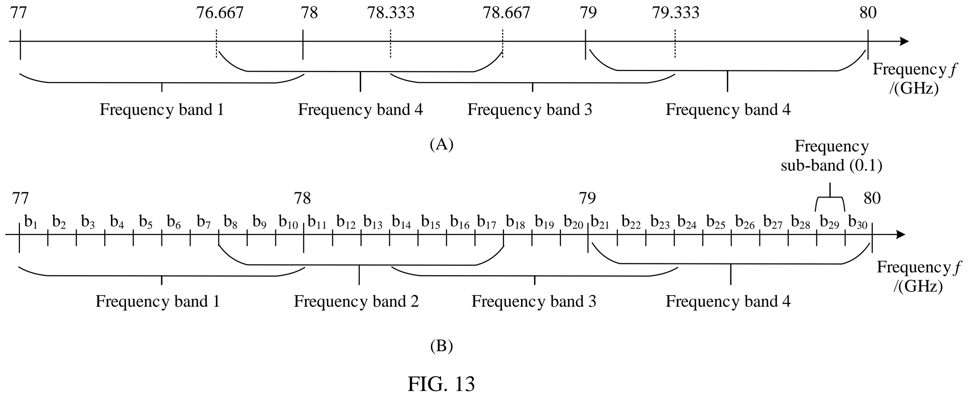

Refer to FIG. 13. FIG. 13 is a diagram of another frequency band division manner according to an embodiment of this application. As shown in (A) part of FIG. 13, the frequency range of the total available bandwidth is 77 GHz to 80 GHz, N2=4, and the transmission bandwidth requirement range of the detection apparatus is 1 GHz. The detection apparatus determines four frequency bands based on the total available bandwidth and a frequency band quantity (that is, N2). The four frequency bands respectively represent a frequency band 1 to a frequency band 4. The width of the frequency band is 1 GHz. Therefore, a frequency range of a 1st frequency band is 77 GHz to 78 GHz; a frequency range of a 2nd frequency band is 77.667 GHz (using an example in which a number is accurate to three decimal places) to 78.667 GHz; a frequency range of a 3rd frequency band is 78.333 GHz to 79.333 GHz; and a frequency range of a 4th frequency band is 79 GHz to 80 GHz.

As shown in (A) part of FIG. 13, start points and end points of the frequency band 2 and the frequency band 3 have a relatively large quantity of decimal places. This is inconvenient for actual use. Therefore, adjustment may be performed with reference to frequency sub-bands. As shown in (B) part of FIG. 13, the total available frequency band includes 30 frequency sub-bands (that is, M=30) that are respectively numbered from b1 to b30. A width of each frequency sub-band is 0.1 GHz. The frequency sub-band is equivalent to a raster point. In this case, a start point and an end point of a frequency band may be adjusted to raster points of nearest frequency sub-bands. For example, after adjustment, a frequency range of a frequency band 2 may be 77.7 GHz (that is, a boundary between b7 and b8) to 78.7 GHz (that is, a boundary between b17 and b18), and a frequency range of a frequency band 3 may be 78.3 GHz (that is, a boundary between b13 and b14) to 79.3 GHz (that is, a boundary between b23 and b24).

The start point and the end point of the frequency band are adjusted with reference to frequency sub-bands. In this way, the start point and the end point of the frequency band can be avoided from being excessively randomized. This facilitates standardization of frequency band division. The standardization helps reduce a calculation amount, thereby improving processing efficiency.

In addition, rasterizing the total available frequency band further helps improve availability of interference sensing. For example, radars with different orientations may separately sense interference conditions in ranges in which the radars are located, and correspond the interference conditions to frequency sub-bands. In other words, sharing of an interference sensing result is implemented by using uniform frequency sub-bands, thereby improving standardization and reducing a calculation amount of a process such as alignment and deduplication. For example, a vehicle is equipped with four radars with different orientations, and the four radars can share 360° interference sensing results. Each radar may transmit, by using a raster point number as an index, a sensing result obtained by the radar, and complete information sharing through an interface between the radar and a vehicle-mounted central control unit such as an MDC. In this way, when the radar does not turn to a specific direction, an interference condition corresponding to each raster point in the direction is known, to quickly select an appropriate resource for target detection.

Certainly, if division into frequency sub-bands is not performed, sharing of an interference result may also be implemented. For example, a specific frequency range is used to share an interference condition, or interference corresponds to a specific frequency range. In this case, each radar needs to align and deduplicate sensing results from other radars, to obtain an interference condition of each frequency range on an available frequency band.

The foregoing describes the orientation range and the frequency band. The following describes a relationship between the orientation range and the frequency band.

In a possible implementation, there is a correspondence between an orientation range and a frequency band. There is a correspondence between the N1 orientation ranges and the N2 frequency bands.

In a possible design, N2 is equal to N1, and the N2 frequency bands respectively correspond to the N1 orientation ranges. The following uses an example in which N2=N1=N for description, where N is an integer and N>O, and optionally, N≥1. It should be noted that, when N2 is greater than N1, N1 frequency bands may also be selected from the N2 frequency bands to correspond to the N1 orientation ranges.

The following lists several possible implementations of the correspondence between the orientation range and the frequency band.

In an implementation 1, in N orientation ranges, center frequencies of frequency bands corresponding to the N orientation ranges that are passed through in a clockwise direction starting from a first orientation sequentially change. The sequentially changing is sequentially ascending or sequentially descending, or the clockwise direction may be replaced with an anticlockwise direction.

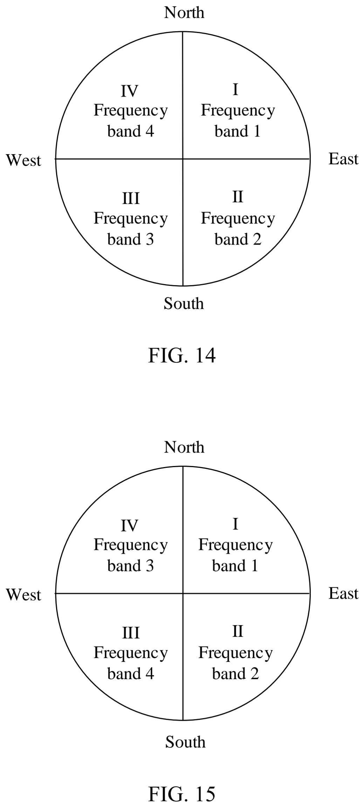

FIG. 14 is a diagram of a correspondence between a frequency band and an orientation range according to an embodiment of this application. For example, each of four orientation ranges occupies 90°. A north direction is used as a start point (that is, a first orientation). The four orientation ranges that are passed through in the clockwise direction are respectively represented by I, II, III, and IV. The orientation range I corresponds to a frequency band 1, the orientation range 2 corresponds to a frequency band 2, the orientation range 3 corresponds to a frequency band 3, and the orientation range 4 corresponds to a frequency band 4. In other words, when a frequency band is allocated to each orientation range, a specific direction (north in FIG. 14) is 0°. Rotation is performed in a clockwise direction or an anticlockwise direction. Each 90° angle range corresponds to one frequency band. During frequency band allocation, a frequency band allocation order may be from a low frequency to a high frequency or from a high frequency to a low frequency.

Certainly, the first orientation may also be another direction. For example, east is used as a first orientation. In this case, the orientation range 2 corresponds to a frequency band 1, the orientation range 3 corresponds to a frequency band 2, the orientation range 4 corresponds to a frequency band 3, and the orientation range I corresponds to a frequency band 4.

In an implementation 2, in N orientation ranges, center frequencies of frequency bands corresponding to N/2 orientation ranges that are passed through in a clockwise direction starting from a first orientation sequentially change. Center frequencies of frequency bands corresponding to N/2 orientation ranges that are passed through in an anticlockwise direction starting from the first orientation sequentially change. The sequentially changing is sequentially ascending or sequentially descending, or the clockwise direction and the anticlockwise direction may be replaced with each other.

FIG. 15 is a diagram of a correspondence between a frequency band and an orientation range according to an embodiment of this application. An orientation range I and an orientation range II in a clockwise direction starting from north respectively correspond to a frequency band 1 and a frequency band 2. An orientation range IV and an orientation range III in an anticlockwise direction starting from north respectively correspond to a frequency band 3 and a frequency band 4. In other words, a specific direction (north in FIG. 15) is 0°. Rotation is performed by 180° in the clockwise direction (or the anticlockwise direction), and then rotation is performed by 180° in the anticlockwise direction (or the clockwise direction) from the absolute direction 0°. Each 90° angle range corresponds to one frequency band. During frequency band allocation, a frequency band allocation order may be from a low frequency to a high frequency or from a high frequency to a low frequency.

In an implementation 3, first N/2 frequency bands (in descending order or ascending order of center frequencies) of the N frequency bands are in one-to-one correspondence with N/2 orientation ranges in a clockwise direction starting from a first direction (for example, north); and remaining N/2 frequency bands of the N frequency bands are in one-to-one correspondence with remaining N/2 orientation ranges in an order from a center to two sides (which may be left first and right later or right first and left later).

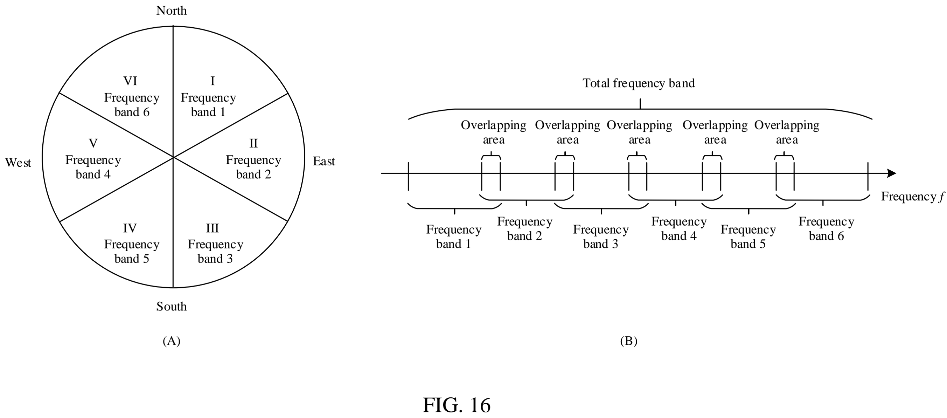

For example, FIG. 16 is a diagram of another correspondence between a frequency band and an orientation range according to an embodiment of this application. With reference to (A) part of FIG. 16, six orientation ranges are respectively represented by I, II, III, IV, V, and VI. With reference to (B) part of FIG. 16, a total available frequency band may include six frequency bands that are respectively represented by a frequency band 1 to a frequency band 6 from a low frequency to a high frequency. The orientation ranges I, II, and III that are passed through in a clockwise direction from north respectively correspond to the frequency bands 1 to 3. For the remaining orientation ranges IV, V, and VI, the orientation range V located at a center corresponds to the frequency band 4, the orientation range VI located in an anticlockwise direction (that is, left) of the orientation range V corresponds to the frequency band 5, and the orientation range IV located in a clockwise direction (that is, right) of the orientation range V corresponds to the frequency band 6.

Certainly, the foregoing described implementations are examples used for ease of understanding the correspondence between the orientation range and the frequency band. For an orientation range division manner and a frequency band division manner, refer to the foregoing description.

For ease of understanding, the following continues to supplement possible designs of the correspondence between the orientation range and the frequency band in some possible frequency band division manners.

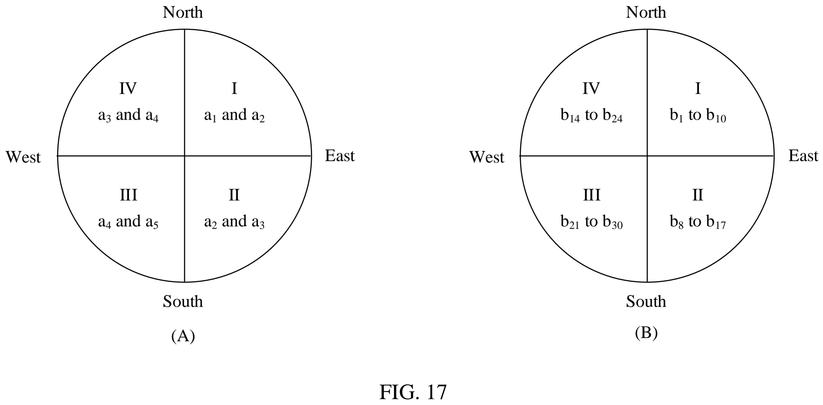

FIG. 17 is a diagram of another correspondence between a frequency band and an orientation range according to an embodiment of this application. In (A) part of FIG. 17, for frequency band division, refer to FIG. 12. An orientation range I corresponds to a frequency band 1 (including a frequency sub-band a1 and a frequency sub-band a2), and an orientation range II corresponds to a frequency band 2 (including the frequency sub-band a2 and a frequency sub-band a3). For other orientation ranges, refer to FIG. 17. It is not difficult to learn that the orientation range I and the orientation range II have a common frequency sub-band a2.

In (B) part of FIG. 17, for frequency band division, refer to FIG. 13. An orientation range I corresponds to a frequency band 1 (including a frequency sub-band b1 to a frequency sub-band b10), and an orientation range 2 corresponds to a frequency band 2 (including the frequency sub-band b8 to a frequency sub-band b17). For other orientation ranges, refer to FIG. 17. It is not difficult to learn that the orientation range I and the orientation range II have the common frequency sub-bands b8 to b10.

It should be understood that the quantity of orientation ranges and the quantity of frequency bands are merely examples, and this application is also applicable to a case in which there are more orientation ranges or more frequency bands.

In some possible examples, the quantity N2 of frequency bands and the quantity N1 of orientation ranges may satisfy the following formula: 2N2=N1. For example, four orientation ranges and two frequency bands are used as an example. An orientation range I and an orientation range II correspond to a frequency band 1, and an orientation range III and an orientation range IV correspond to a frequency band 2.

In a possible implementation, there may be a relatively large resource difference between orientation ranges with one or more pairs of opposite directions, to reduce interference in opposite directions.

The resource may include the frequency resource described above. For example, the resource difference may include a difference between frequency bands corresponding to orientation ranges with opposite directions. For example, the resource difference may include a difference between frequency bands corresponding to orientation ranges with opposite directions. For example, the frequency bands corresponding to the orientation ranges need to satisfy a preset condition. For example, an order spacing between the frequency bands corresponding to the orientation ranges is greater than, or greater than or equal to a preset value. For another example, a frequency spacing between the frequency bands corresponding to the orientation ranges is greater than or equal to another preset value.

FIG. 14 is used as an example. An orientation range I and an orientation range III are two orientation ranges with opposite directions. The orientation range I corresponds to a frequency band 1, and the orientation range III corresponds to a frequency band 3. A "distance" between the frequency band 1 and the frequency band 3 in the total available frequency band is relatively long. In other words, a difference between frequency ranges is relatively large. FIG. 16 is used as an example. An orientation range I and an orientation range IV are opposite in directions. The orientation range I corresponds to a frequency band 1. The orientation range IV corresponds to a frequency band 5. A "distance" between the frequency band 1 and the frequency band 5 in the total available frequency band is relatively long.

Further, in the N orientation ranges, a relatively small resource difference may exist between adjacent orientation ranges. For example, frequency bands corresponding to the two adjacent orientation ranges need to satisfy another preset condition. For example, an order spacing between the frequency bands corresponding to the orientation ranges is less than, or less than or equal to a preset value. For another example, a frequency spacing between the frequency bands corresponding to the orientation ranges is less than or equal to another preset value. Because an orientation of a detection apparatus may change, a relatively small difference between frequency ranges of frequency bands corresponding to two adjacent orientation ranges facilitates frequency band switching. In some scenarios, for a detection apparatus that can implement interference sensing, frequency bands with a relatively small difference are used in adjacent orientation ranges, to improve interference sensing effect. Specifically, the radar is used as an example. The radar includes a local oscillator. The local oscillator may continuously generate signals in a continuous frequency range. During interference sensing, the radar needs to generate a sensing signal of a frequency range to be sensed at a receiving end, and frequency mixing is performed on the sensing signal and a signal of the frequency range, to detect an interference condition in the sensing signal. When the frequency difference between the frequency bands corresponding to the two adjacent orientation ranges is not large, the radar can conveniently consider both a detection signal of a current frequency band and a sensing signal of a frequency band corresponding to an adjacent orientation range. In other words, the radar may generate a signal that may cover the current frequency band and the frequency band of the adjacent orientation range. During use, the signal of the current frequency band is intercepted by using a filter for detection, and the frequency band corresponding to the adjacent orientation range is used as a sensing signal (that does not need to be transmitted). In this case, when the frequency difference between the frequency bands corresponding to the two adjacent orientation ranges is large, the radar needs to generate a signal with a very large bandwidth. A frequency spacing between the two frequency bands is a signal that is not for use. This wastes power and time.

FIG. 15 is used as an example. An orientation range I and an orientation range II are adjacent. The orientation range I corresponds to a frequency band 1. A frequency band corresponding to the orientation range II is a frequency band 2. A difference between the frequency bands is less than a maximum value of an order spacing between the frequency bands. In other words, two frequency bands that are farthest from each other on a total available frequency band may not correspond to two adjacent orientation ranges. For example, the frequency band 1 and the frequency band 4 do not correspond to two adjacent orientation ranges.

In addition, in FIG. 15, the orientation range I and an orientation range III are two orientation ranges with opposite directions. The orientation range I corresponds to the frequency band 1, and the orientation range III corresponds to a frequency band 4. A "distance" between the frequency sub-band 1 and the frequency band 4 is relatively long on the total available frequency band, so that interference in opposite directions can be reduced.

In a possible implementation, a resource difference may be related to an order difference between frequency bands.

For example, the frequency band division manner in FIG. 10 is used as an example. An order difference between the frequency band 1 and the frequency band 2 is 1. Therefore, a frequency difference is a difference of one unit. Similarly, the frequency band 1 and the frequency band 4 differ by a difference of three units. It is not difficult to learn that the N frequency bands are arranged according to a change order of the center frequencies of the N frequency bands. A difference between an $i^{th}$ frequency band and a $j^{th}$ frequency band is (j-i) units, where i and j are both integers greater than 0, and j≥i.

In some scenarios, in addition to frequency resource division, a time domain resource and/or a polarization direction resource may also be divided. The following first describes division of the time domain resource. For some logic and possible designs, refer to the foregoing descriptions.

A time domain resource that can be selected may be described by using a total available time period. In other words, the total available time period means a time range that can be used by the detection apparatus, or a time period range in which the detection apparatus can operate.

In some scenarios, time on a time axis is divided by periodicities, and cycles forward in a form of a periodicity. A time width and a start moment of the periodicity may be predefined or pre-specified. For example, a possible industry standard specifies that a periodicity of the detection apparatus may be 50 ms. For another example, another standard specifies that a periodicity of the detection apparatus is 66 ms. When transmitting a signal, the detection apparatus usually performs detection in a fixed time period in the periodicity. For example, some detection periodicities are 50 ms, and the detection apparatus may perform detection in 10 ms to 20 ms after the periodicity starts. Certainly, 50 ms above is merely an example. This application is also applicable to a periodicity of another duration.

The total available time period may be an entire time period in one periodicity, or may be a part of time period in one periodicity. For example, the periodicity of 50 ms is used as an example, and the total available time period may be 50 ms. For another example, within the periodicity of 50 ms, the total available time period is 0 ms to 45 ms, and 45 ms to 50 ms is used for another function, for example, used by the detection apparatus to perform interference sensing, or used for time synchronization between detection apparatuses.

The total available time period includes a plurality of time periods. A quantity of time periods included in the total available time period may be predefined or pre-specified. In some scenarios, the quantity of time periods is related to a quantity of orientation ranges. For example, the quantity of time periods is equal to the quantity of orientation ranges. For another example, the quantity of time periods is in a proportional relationship with the quantity of orientation ranges. For ease of description, in this specification, the quantity of time periods included in the total available time period is set to S, where S is an integer and S>0. Optionally, S=N1, or S=N1/2 (in this case, N1 is an even number).

There may be a plurality of possible cases in which the total available time period includes a plurality of time periods. The following lists two possible cases as examples:

Case 1: The S time periods may overlap.

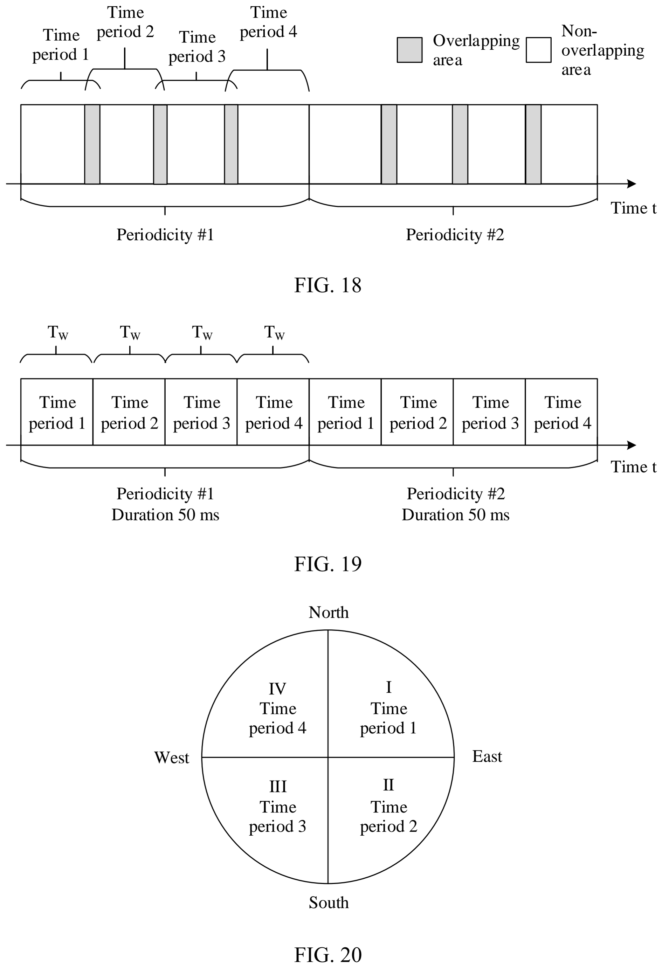

As shown in FIG. 18, the S (for example, S is 4) time periods are respectively represented by a time period 1 to a time period 4, and there is a common time domain resource (that is, an overlapping area) between the time period 1 and the time period 2. There is an overlapping area between the time period 2 and the time period 3. There is an overlapping area between the time period 3 and the time period 4.

Optionally, sizes of the S time periods are uniform. In other words, time widths of the S time periods are the same. Further, time widths of overlapping areas between the S time periods are the same. Optionally, the time width $T_{over}$ of the overlapping area may satisfy the following formula:

$$T_{over} = \frac{ST_w - T_{available}}{S - 1}$$

Herein, $T_w$ is a time width of a time period, and $T_{available}$ is a time width of the total available time period.

It should be noted that the total available time period shown in FIG. 18 is an entire time period of a periodicity. Because the periodicity is cyclic, although a time period 4 in a periodicity #1 in FIG. 18 and a time period 1 in a next periodicity (that is, a periodicity #2) do not overlap, this application is also applicable to a case in which the time period 4 in the periodicity #1 and the time period 1 in the next periodicity overlap.

For example, in consideration of a case in which a final time period in a current periodicity and an initial time period in a next periodicity, the time width $T_{over}$ of the overlapping area may satisfy the following formula:

$$T_{over} = \frac{ST_w - T_{available}}{S}$$

Herein, $T_w$ is a time width of a time period, and $T_{available}$ is a time width of the total available time period.

For detailed descriptions of the case 1, further refer to the description of the case 1 in which a total frequency band includes N2 frequency bands.

Case 2: As shown in FIG. 19, the S time periods may not overlap.

Optionally, a sum of time widths of the S time periods may be equal to a time width of a total available time period. For example, when the time widths of the S time periods are the same, S * $T_w$ = $T_{available}$, that is,

$T_w = \frac{T_{available}}{S}$ , where $T_w$ is a time width of a time period, and $T_{available}$ is the time width of the total available time period. It can be learned from FIG. 19 that the S time periods are connected end to end, and there is no gap between any two adjacent time periods.

For related descriptions, refer to the description of the case 2 in which the total frequency band includes the N2 frequency bands.

The foregoing describes only a possibility that the S time periods are on the total available time period. For ease of understanding, the following describes, by using an example, a possible implementation of obtaining the S frequency bands. The following briefly describes only some possible implementations. For detailed descriptions, refer to descriptions of the frequency band part.

The following describes, by using examples, several possible implementations of obtaining the S time periods.

In an implementation 1, the time widths of the S time periods are related to a transmission time period requirement range of the detection apparatus. For example, the transmission time period requirement range of the detection apparatus is 10 ms or 15 ms.

Optionally, the time width of the time period is equal to the transmission time period requirement range of the detection apparatus.

Further, when the transmission time period requirement range of the detection apparatus is greater than, or greater than or equal to the total available time period $\frac{1}{S}$, the width of the time period is equal to the transmission time period requirement range of the detection apparatus. For example, S=4. If the width $T_{available}$ of the total available time width is 50 ms, the width of the requirement range $T_r$ of the transmission time period of the detection apparatus is 15 ms. Because $T_r > \frac{T_{available}}{S}$, $T_w = T_r$. In addition, because $T_r > \frac{T_{available}}{S}$, the sum of the time widths of the S time periods is greater than the time width of the total available time period. Therefore, the S time periods overlap. In this implementation, time domain resource division is standardized, and time domain resource division is avoided from being excessively randomized, thereby reducing interference in time domain. In addition, any time period can satisfy a large time width required by the detection apparatus, thereby improving detection performance of the detection apparatus.

Optionally, when the transmission time period requirement range of the detection apparatus is less than or equal to, or less than the total available time period $\frac{1}{S}$, the width of the time period is related to the available time period and S.

In an implementation 2, the available time period includes M time sub-periods, the M time sub-periods do not overlap, and each time sub-period of the S time periods occupies K consecutive time sub-periods in the M time sub-periods. Herein, M is an integer and M>S, and K is an integer and K>0.

Optionally, M may be predefined or pre-specified, or may be calculated based on another parameter (described below). It should be further noted that values of M, K, and the like herein may be different from values of M, K, and the like in the foregoing descriptions of the frequency band.

In a possible implementation, K=M-S+1, and an overlapping area of two adjacent time periods in the S time periods is M-S time sub-periods.

In a possible implementation, M is determined based on the transmission time width requirement range of the detection apparatus, where M satisfies the following formula:

$$\frac{M-S}{M-1}T_{available} < T_r \le \frac{M-S+1}{M}T_{available},$$

where

$T_r$ is the transmission time width requirement range of the detection apparatus, and $\boldsymbol{T_{available}}$ is the total available time period of the detection apparatus.

Optionally, the foregoing implementation is implemented in a case in which the transmission time width requirement range is greater than, or greater than or equal to the total available time period $\frac{1}{S}$ .

In another possible implementation, M is predefined. In this case, this is equivalent to a case in which the total available time period is divided into the M time sub-periods based on a granularity, to form a raster-shaped frequency band range. When the S time periods are determined, start points and end points of the S frequency bands are aligned with "rasters". In other words, a start point and an end point of a time period fall on boundaries of time sub-periods. For example, the M time sub-periods may be considered as M raster points. The detection apparatus may adjust a start point and an end point of each time period to boundaries of time sub-periods based on the start point and the end point of each of the S time periods and boundary locations of the M time sub-periods.

For the foregoing related descriptions, refer to the descriptions of the frequency domain part. Details are not described herein again.

**In a possible implementation, there is a correspondence between an orientation range and a time period.**

For example, there is a correspondence between N1 orientation ranges and the S time periods. In a possible design, S is equal to N1, and the S time periods respectively correspond to the N1 orientation ranges. The following uses an example in which S=N1=N, where N is an integer and N≥0, and optionally, N≥1.

The following lists several possible implementations of the correspondence between the orientation range and the time period.

In an implementation 1, in N orientation ranges, center moments of time periods corresponding to the N orientation ranges that are passed through in a clockwise direction starting from a first orientation sequentially change. The sequentially changing is sequentially ascending or sequentially descending, or the clockwise direction may be replaced with an anticlockwise direction. The center moment is a moment corresponding to a midpoint of each time period.

In an implementation 2, in N orientation ranges, center moments of time periods corresponding to the N/2 orientation ranges that are passed through in a clockwise direction starting from a first orientation sequentially change. Center moments of time periods corresponding to N/2 orientation ranges that are passed through in an anticlockwise direction starting from the first orientation sequentially change. The sequentially changing is sequentially ascending or sequentially descending, or the clockwise direction and the anticlockwise direction may be replaced with each other.

Refer to FIG. 20. FIG. 20 is a diagram of a correspondence between a frequency band and an orientation range according to an embodiment of this application. An orientation range I corresponds to a time period 1, an orientation range II corresponds to a time period 2, an orientation range III corresponds to a time period 4, and an orientation range IV corresponds to a time period 3. In other words, when a time period is allocated to each orientation range, a specific direction (north in FIG. 20) is 0°. Rotation is performed in a clockwise direction or an anticlockwise direction. Each 90° angle range corresponds to one time period. During time period allocation, an allocation order of time periods may be a chronological order (that means early to late of center moments of the time periods) or a reverse chronological order.

In an implementation 3, first N/2 time periods (center moments from early to late or from late to early) of the N time periods are in one-to-one correspondence with N/2 orientation ranges in a clockwise direction starting from a first direction (for example, north); and remaining N/2 time periods of the N time periods are in one-to-one correspondence with remaining N/2 orientation ranges in an order from a center to two sides (which may be left first and right later or right first and left later).

Certainly, the foregoing described implementations are examples used for ease of understanding the correspondence between the orientation range and the time period. For an orientation range division manner and a time period division manner, refer to the foregoing description.

As mentioned above, there may be a relatively large resource difference between orientation ranges with one or more pairs of opposite directions. The resource may include a resource in time domain. For example, the resource difference may include a difference between time periods corresponding to orientation ranges with opposite directions. For example, the time periods corresponding to the orientation ranges need to satisfy a preset condition. For example, an order spacing between the time periods corresponding to the orientation ranges is greater than, or greater than or equal to a preset value. For another example, a time spacing between the time periods corresponding to the orientation ranges is greater than or equal to another preset value.

FIG. 20 is used as an example. The orientation range I and the orientation range III are two orientation ranges with opposite directions. The orientation range I corresponds to the time period 1, and the orientation range III corresponds to the time period 3. A "distance" between the time period 1 and the time period 3 is relatively long in the total available time period. In other words, the difference in time domain is relatively large.

Further, in the N orientation ranges, a relatively small resource difference may exist between adjacent orientation ranges. For example, frequency bands corresponding to two adjacent orientation ranges need to satisfy another preset condition. For example, an order spacing between the time periods corresponding to the orientation ranges is less than, or less than or equal to a preset value. For another example, a time spacing between the time periods corresponding to the orientation ranges is less than or equal to another preset value. Because an orientation of a detection apparatus may change, a relatively small difference between the time periods corresponding to the two adjacent orientation ranges facilitates time period switching. For a detection apparatus that can implement interference sensing, time periods with a relatively small difference are used in adjacent orientation ranges, to improve interference sensing effect.

FIG. 20 is still used as an example. The orientation range I and the orientation range II are adjacent. The orientation range I corresponds to the time period 1, and the orientation range II corresponds to the time period 4. A difference between the time periods is relatively small in time domain.

In a possible implementation, a resource difference may be related to an order difference between time periods. For example, FIG. 18 is used as an example. The order difference between the time period 1 and the time period 2 is 1. Therefore, the difference in time domain is a difference of one unit.

It should be noted that, because the periodicity is cyclic, a difference between time periods of the periodicity and a next periodicity needs to be further considered. For another example, the time period 1 and the time period 4 differ by a difference of one unit in one periodicity. Because the time period 4 is close to a time period 1 in the next periodicity, a difference of one unit between the time period 1 and the time period 4 is considered.

It is not difficult to learn that the S time periods are arranged according to a change order of center moments of the S time periods. A difference between an $h^{th}$ time period and an $l^{th}$ time period satisfies the following formula:

$$\Delta t = min[(l-h),(h+S-l)],$$

where h and l are both integers greater than 0, and l≥h.

In some possible designs, the resource difference may include a frequency difference and a time domain difference.

In a possible solution, in the N1 orientation ranges, a resource difference between orientation ranges with opposite directions is greater than a first threshold. The resource difference is related to a difference between frequency bands corresponding to the orientation ranges and a difference between time periods corresponding to the two orientation ranges. For example, an order difference is used as an example. The resource difference between the orientation ranges with the opposite directions is greater than a difference of X units, where X is an integer. For example, X≥1 or X≥2. In other words, if X≥2, a sum of an order difference between the frequency ranges and an order difference between the time periods of the two orientation ranges with the opposite directions is greater than or equal to a difference of two units.

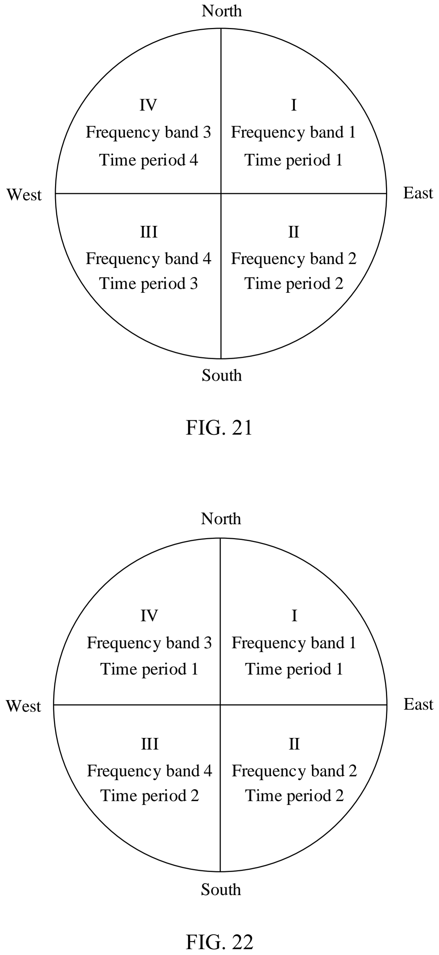

Refer to FIG. 21. FIG. 21 is a diagram of a correspondence among a frequency band, a time period, and an orientation range according to an embodiment of this application. An orientation range I corresponds to a frequency band 1 and a time period 1, an orientation range II corresponds to a frequency band 2 and a time period 2, an orientation range III corresponds to a frequency band 4 and a time period 3, and an orientation range IV corresponds to a frequency band 3 and a time period 4. A direction of the orientation range I is opposite to a direction of the orientation range III. A frequency difference is three units, and a time domain difference is two units. Therefore, a resource difference is a difference of four units. Cases of other opposite directions are similar. A difference between resources occupied by signals in opposite directions may be further increased by using a time domain difference and a frequency difference. This helps reduce mutual interference between detection apparatuses.

In a possible implementation, when the frequency difference between the two directions with the opposite orientations is relatively small, different time periods may be allocated to increase a difference in time domain, thereby increasing a resource difference between the two orientation ranges.

In some scenarios, a quantity of time periods may be unequal to a quantity of orientation ranges. Refer to FIG. 22. FIG. 22 is a diagram of another possible correspondence among a frequency band, a time period, and an orientation range according to an embodiment of this application. A quantity of time periods may be two, a quantity of frequency bands is four, and a quantity of orientation ranges is also four. A correspondence among the time periods, the frequency bands, and the orientation ranges is shown in the figure. A direction of an orientation range I is opposite to a direction of an orientation range III. A frequency difference is three units, and a time domain difference is one unit. Therefore, a resource difference is a difference of four units. Cases of other opposite directions are similar.

The following first describes division of a polarization direction range resource. For some logic and possible designs, refer to division of the total available frequency band and the total available time period.

When the detection apparatus transmits a signal, there may be a plurality of radiation direction choices for the transmitted signal. The available total polarization direction range means a polarization direction range that can be used by the detection apparatus, or a polarization direction range in which the detection apparatus can operate.

Optionally, the available total polarization direction range may be 360° (that is, a circle), or the available total polarization direction range may be an angle range in three-dimensional space.

The available total polarization direction range includes a plurality of polarization direction ranges. A quantity of polarization direction ranges included in the available total polarization direction range may be predefined or pre-specified. In some scenarios, the quantity of polarization direction ranges is related to a quantity of orientation ranges. For example, the quantity of polarization direction ranges is equal to the quantity of orientation ranges. For another example, the quantity of polarization direction ranges is in a proportional relationship with the quantity of orientation ranges. For ease of description, in this specification, a quantity of polarization direction ranges of frequency bands is set to P, where P is an integer and P>0. Optionally, P=N1, or P=N1/2 (in this case, N1 is an even number).

There may be a plurality of possible cases in which the total available polarization direction range includes a plurality of polarization direction ranges. The following lists two possible cases as examples.

Case 1: The P polarization direction ranges may overlap. In other words, a common polarization direction exists between two adjacent polarization direction ranges. Optionally, sizes of the P polarization direction ranges are uniform. In other words, widths of the P polarization direction ranges are the same. Further, widths of overlapping areas between the P polarization direction ranges are the same.

For related descriptions, refer to the description of the case 1 in which the total frequency band includes the N2 frequency bands.

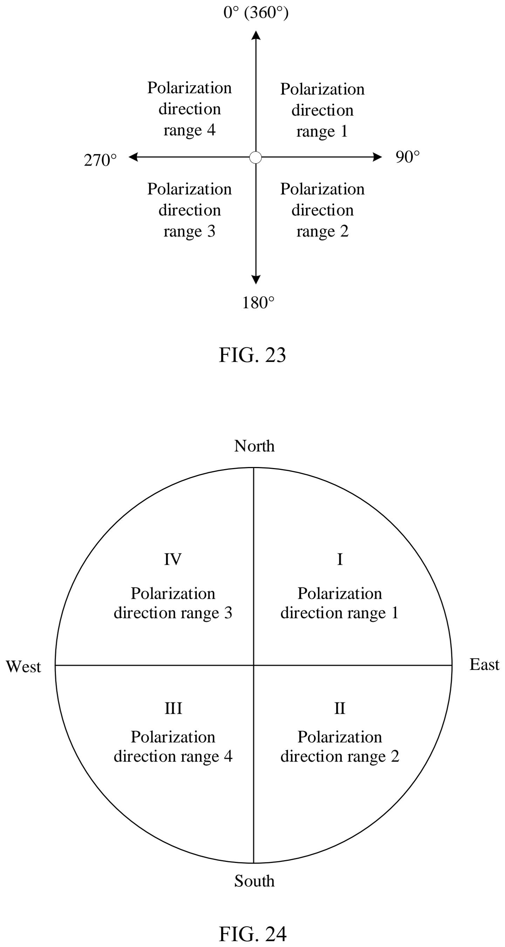

Case 2: The P polarization direction ranges may not overlap, as shown in FIG. 23. Optionally, a sum of widths of the P polarization direction ranges may be equal to a width of the total available polarization direction range. For example, when the direction range widths of the P polarization direction ranges are the same, P * $D_W = D_{available}$, that is, $D_W = \frac{D_{available}}{P}$, where $D_W$ is a

width of a polarization direction range, and $D_{available}$ is the width of the total available polarization direction range. It can be learned from FIG. 23 that, the P polarization direction ranges are connected end to end, and there is no gap between any two adjacent polarization direction ranges.

For related descriptions, refer to the description of the case 2 in which the total frequency band includes the N2 frequency bands.

The foregoing describes only a possibility of the P polarization direction ranges. For ease of understanding, the following describes, by using an example, a possible implementation of obtaining the P frequency bands. The following briefly describes only some possible implementations. For detailed descriptions, refer to descriptions of the frequency band part and/or the time period part.

The following describes, by using examples, several possible implementations of obtaining the P polarization direction ranges.

In an implementation 1, the direction range widths of the P polarization direction ranges are related to a polarization direction requirement range of the detection apparatus. For example, the polarization direction requirement range of the detection apparatus is 90° or 120°.

Optionally, the width of the polarization direction range is equal to the polarization direction requirement range of the detection apparatus.

Further, when the polarization direction requirement range of the detection apparatus is greater than, or greater than or equal to $\frac{1}{P}$ of the total available polarization direction range, the width of the polarization direction range is equal to the polarization direction requirement range of the detection apparatus.

Optionally, when the polarization direction requirement range of the detection apparatus is less than or equal to, or less than $\frac{1}{P}$ of the total available polarization direction, the width of the polarization direction range is related to the available polarization direction range and P.

In an implementation 2, the available polarization direction range includes M polarization direction sub-ranges, the M polarization direction sub-ranges do not overlap, and each of the P polarization direction ranges occupies K consecutive polarization direction sub-ranges in the M polarization direction sub-ranges. Herein, M is an integer and M>P, and K is an integer and K>0.

Optionally, M may be predefined or pre-specified, or may be calculated based on another parameter (described below). It should be further noted that values of M, K, and the like herein may be different from values of M, K, and the like in the foregoing descriptions of the frequency band.

For the foregoing related descriptions, refer to the descriptions of the frequency band part and/or the time period part. Details are not described herein again.

In a possible implementation, there is a correspondence between an orientation range and a polarization direction range. There is a correspondence between the N1 orientation ranges and the P polarization direction ranges.

In a possible design, P is equal to N1, and the P polarization direction ranges respectively correspond to the N1 orientation ranges. The following uses an example in which P=N1=N, where N is an integer and N≥0, and optionally, N≥1.

The following lists several possible implementations of the correspondence between the orientation range and the polarization direction range.

In an implementation 1, in N orientation ranges, center angles of polarization direction ranges corresponding to the N orientation ranges that are passed through in a clockwise direction starting from a first orientation sequentially change. The sequentially changing is sequentially ascending or sequentially descending, or the clockwise direction may be replaced with an anticlockwise direction. The center angle is an angle corresponding to an angular bisector of each polarization direction range.

In an implementation 2, in N orientation ranges, center angles of polarization direction ranges corresponding to N/2 orientation ranges that are passed through in a clockwise direction starting from a first orientation sequentially change. Center angles of polarization direction ranges corresponding to N/2 orientation ranges that are passed through in an anticlockwise direction starting from the first orientation sequentially change. The sequentially changing is sequentially ascending or sequentially descending, or the clockwise direction and the anticlockwise direction may be replaced with each other.

Refer to FIG. 24. FIG. 24 is a diagram of a correspondence between a frequency band and an orientation range according to an embodiment of this application. An orientation range I corresponds to a polarization direction range 1, an orientation range II corresponds to a polarization direction range 2, an orientation range III corresponds to a polarization direction range 4, and an orientation range IV corresponds to a polarization direction range 3. In other words, when a polarization direction range is allocated to each orientation range, a specific direction (north in FIG. 20) is 0°. Rotation is performed in a clockwise direction or an anticlockwise direction. Each 90° angle range corresponds to one polarization direction range. When the polarization direction range is allocated, an allocation order of polarization direction ranges may be a clockwise direction or an anticlockwise direction.

In an implementation 3, first N/2 polarization direction ranges (in descending order or ascending order of center angles) of the N polarization direction ranges are in one-to-one correspondence with N/2 orientation ranges in a clockwise direction starting from a first direction (for example, north); and remaining N/2 polarization direction ranges of the N polarization direction ranges are in one-to-one correspondence with remaining N/2 orientation ranges in an order from a center to two sides (which may be left first and right later or right first and left later).

Certainly, the foregoing described implementations are examples used for ease of understanding the correspondence between the orientation range and the polarization direction range. For an orientation range division manner and a polarization direction range division manner, refer to the foregoing description.

As mentioned above, there may be a relatively large resource difference between orientation ranges with one or more pairs of opposite directions. The resource may include a polarization direction resource. For example, the resource difference may include a difference between polarization direction ranges corresponding to orientation ranges with opposite directions.

FIG. 24 is used as an example. The orientation range I and the orientation range III are two orientation ranges with opposite directions. The orientation range I corresponds to the polarization direction range 1, and the orientation range III corresponds to the polarization direction range 3. An angle between the polarization direction range 1 and the polarization direction range 3 is relatively large. In other words, an angle difference between the two polarization direction ranges (for example, a center angle is used as a reference line) is relatively large.

Further, in the N orientation ranges, a relatively small resource difference may exist between adjacent orientation ranges.

FIG. 24 is still used as an example. The orientation range I corresponds to the polarization direction range 1, and the orientation range IV corresponds to the polarization direction range 4. An angle difference between the two polarization direction ranges on the total polarization direction is relatively small.

In some possible designs, the resource difference may include at least two of a polarization direction difference, a time domain difference, and a frequency difference.

In a possible solution, in the N1 orientation ranges, a resource difference between orientation ranges with opposite directions is greater than a first threshold. The resource difference is related to a difference between frequency bands, a difference between time periods, and a difference between polarization direction ranges corresponding to the two orientation ranges. For example, an order difference is used as an example. The resource difference between the orientation ranges with the opposite directions is greater than a difference of X units, where X is an integer. For example, X≥1 or X≥2. For example, FIG. 23 is used as an example. A difference between the polarization direction range 1 and the polarization direction range 2 is one unit. For another example, a difference between the polarization direction 1 and the polarization direction 3 is two units.

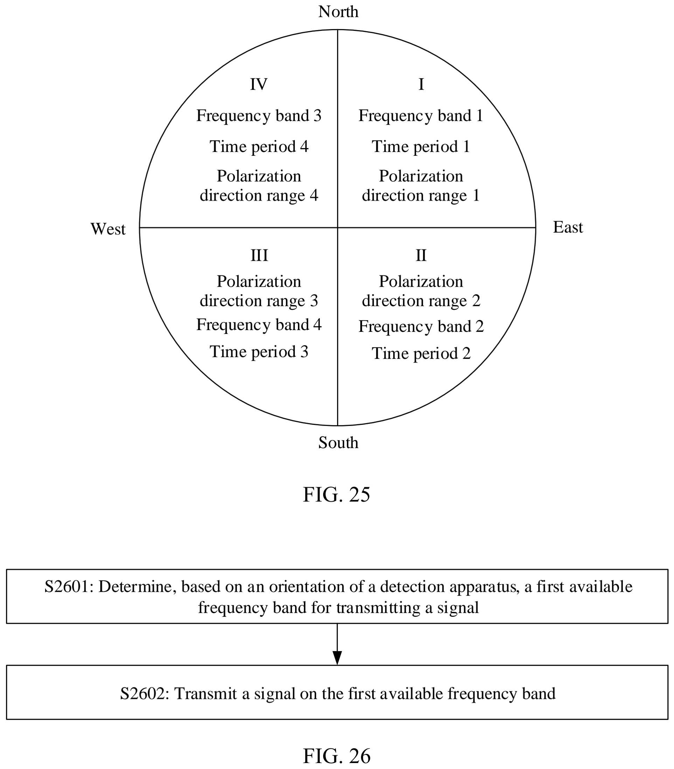

Refer to FIG. 25. FIG. 25 is a diagram of a correspondence among a frequency band, a polarization direction range, and an orientation range according to an embodiment of this application. An orientation range I corresponds to a frequency band 1 and a polarization direction range 1, an orientation range II corresponds to a frequency band 2 and a polarization direction range 2, an orientation range III corresponds to a frequency band 4 and a polarization direction range 3, and an orientation range IV corresponds to a frequency band 3 and a polarization direction range 4. A direction of the orientation range I is opposite to a direction of the orientation range III. A frequency difference is one unit, and a polarization direction range difference is one unit. Therefore, a resource difference is two units. Cases of other opposite directions are similar. By planning a direction range difference and a frequency difference, signals in opposite directions may be further staggered. This helps reduce mutual interference of detection apparatuses.

In some scenarios, a quantity of polarization direction ranges may be unequal to a quantity of orientation ranges. For the related descriptions, refer to the foregoing descriptions.

**The following describes the method in this application with reference to the accompanying drawings.**

Refer to FIG. 26. FIG. 26 is a flowchart of a signal transmission method according to an embodiment of this application. Optionally, the method may be implemented based on the detection apparatus shown in FIG. 4.

The signal transmission method shown in FIG. 26 may include one or more steps of step S2601 and step S2602. It should be understood that, for ease of description, an order from S2601 to S2602 is used for description, but this is not intended to constitute a limitation that the method is necessarily performed in the foregoing order. An execution order, an execution time, a quantity of execution times, and the like of the foregoing one or more steps are not limited in embodiments of this application. Steps S2601 and S2602 are specifically as follows:

Step S2601: A signal transmission apparatus determines, based on an orientation of a detection apparatus, a first available frequency band for transmitting a signal.

The first available frequency band is one of N (N is an integer greater than 1) frequency bands of a total available frequency band of the detection apparatus. Optionally, bandwidths of the N frequency bands are the same. The bandwidths of the N frequency bands are the same. The N frequency bands respectively correspond to N orientation ranges. Herein, N is an integer greater than 1. For descriptions of the N frequency bands, refer to the foregoing descriptions.

In a possible implementation, a distribution status of the N frequency bands on the total available frequency band is related to a transmission bandwidth requirement range of the detection apparatus. The distribution status herein includes whether the N frequency bands overlap, whether values of bandwidths of the N frequency bands are uniform, whether a spacing exists between the N frequency bands, and the like.

In a possible implementation, the N frequency bands overlap. For example, in the N frequency bands, edge parts of two adjacent frequency bands overlap. As shown in FIG. 10, edge parts of a frequency band 1 and a frequency band 2 overlap. Further, when the transmission bandwidth requirement range of the detection apparatus is greater than 1/N of the total available frequency band of the detection apparatus, the N frequency bands overlap.

In other words, the N frequency bands on the total frequency band are not completely separated. However, overlapping is allowed. In a possible case, if overlapping is not allowed between the N frequency bands of the total frequency band, a frequency bandwidth that can be used by the detection apparatus is fixed. Regardless of how wide the operating frequency band of the detection apparatus is, only a bandwidth of 1/N of the total frequency band can be used. It is difficult to satisfy a requirement of a large-bandwidth detection apparatus (a detection apparatus with a relatively large operating bandwidth). Flexibility is poorer. However, in this application, overlapping is allowed between the N frequency bands, and a bandwidth of a frequency band corresponding to each direction range is relatively large. Therefore, each frequency band may be radiated outward based on a center frequency of the frequency band, thereby satisfying a requirement of the large-bandwidth detection apparatus. Even if an operating bandwidth of the detection apparatus is less than the bandwidth of each frequency band, a part of frequency range may be selected from the frequency band to transmit a signal. This has more flexible selection space. Detection apparatuses with different bandwidths may select first available frequency bands based on characteristics of the detection apparatuses, thereby reducing interference between the detection apparatuses. In addition, with reference to an interference sensing technology, a frequency range with relatively small interference in a frequency band may be selected to transmit a signal, to reduce or avoid signal interference, improve detection accuracy, and reduce a missing detection rate and a false alarm rate.

In another possible implementation, the N frequency sub-bands do not overlap. For example, as shown in FIG. 11, the N frequency bands are connected end to end and have no common frequency range. Further, when the transmission bandwidth requirement range of the detection apparatus is less than 1/N of the total available frequency band of the detection apparatus, the N frequency sub-bands do not overlap. In other words, a width of each frequency band may be greater than, or greater than or equal to the transmission bandwidth requirement of the detection apparatus, to facilitate standardization of frequency band division and avoid a case in which an original frequency band allocation manner is disturbed because some detection apparatuses have relatively small bandwidth requirements. In addition, when transmitting a signal, the detection apparatus may select a part of frequency range from the frequency band to transmit the signal, so that selection of the operating bandwidth is more flexible.

The N frequency bands respectively correspond to the N orientation ranges. For detailed descriptions of the N orientation ranges, refer to the foregoing descriptions. For a correspondence between the N frequency bands and the N orientation ranges, refer to related descriptions of FIG. 14 to FIG. 17.

At a specific moment, when the detection apparatus faces a specific direction, the signal transmission apparatus may determine, based on the orientation, to select a specific frequency band as the available frequency band of the detection apparatus. Detection apparatuses facing a same direction range use a same frequency band to transmit signals. Correspondingly, detection apparatuses with opposite orientations may use different frequency bands to transmit signals. Because the detection apparatuses with the opposite orientations are prone to directly transmitting signals, frequency ranges of the two detection apparatuses are staggered, to reduce or avoid mutual interference between the detection apparatuses, thereby improving detection accuracy of the detection apparatuses and reducing a false alarm rate and a missing detection rate.

For example, the correspondence between the N frequency bands and the N orientation ranges is the correspondence described in the foregoing implementation 1. In this case, there is a frequency band difference between orientation ranges with opposite directions, and the differences are relatively uniform, to reduce or avoid interference to the detection apparatus.

For another example, the correspondence between the N frequency bands and the N orientation ranges is the correspondence described in the foregoing implementation 2. In this case, there is a frequency band difference between directions of opposite orientations, and a frequency band difference between adjacent orientation ranges can be reduced. In this way, interference to the detection apparatus is reduced or avoided, and frequency band switching efficiency is also improved.

In some scenarios, there may be the following several possible cases in which the signal transmission apparatus determines, based on the orientation of the detection apparatus, the first available frequency band for transmitting a signal.

Case 1: The orientation of the detection apparatus falls within one orientation range (referred to as a first orientation range for ease of description) of the N orientation ranges, and the detection apparatus uses, as the first available frequency band, a frequency band corresponding to the first orientation range. As shown in FIG. 14, when the orientation of the detection apparatus falls within the orientation range I (that is, between due north and due east), the first available frequency band is the frequency band 1.

Case 2: When the orientation of the detection apparatus falls between boundaries of two orientation ranges of the N orientation ranges, the detection apparatus uses, as the first available frequency band, a frequency band corresponding to one of the orientation ranges. FIG. 14 is still used as an example. For example, if the orientation of the detection apparatus is on a boundary between the orientation range I and the orientation range II (that is, due east), the first available frequency band is the frequency band 1 or the frequency band 2.

Optionally, the detection apparatus may determine the first available frequency band based on interference conditions on the frequency band 1 and the frequency band 2. For example, if strength of an interference signal on the frequency band 1 is lower than strength of an interference signal on the frequency band 2, the frequency band 1 is used as the first available frequency band.

Case 3: There are two orientation ranges in the N orientation ranges (for example, a first orientation range and a second orientation range for distinguishing). There is an overlapping area between the first orientation range and the second orientation range. When the orientation of the detection apparatus falls within an overlapping area (optionally including a boundary), the first available frequency band is a frequency band corresponding to the first orientation range or a frequency band corresponding to the second orientation range. Optionally, the detection apparatus may determine the first available frequency band based on interference conditions of the two orientation ranges.

Step S2602: The signal transmission apparatus transmits a signal on the first available frequency band.

Neither an upper boundary nor a lower boundary of a frequency resource occupied by the transmitted signal exceeds the first available frequency band.

As shown in FIG. 10, the first available frequency band is, for example, the frequency band 1, and both the upper boundary and the lower boundary of the frequency resource occupied by the transmitted signal are within the frequency band 1. In other words, the upper boundary of the frequency occupied by the transmitted signal does not exceed an upper boundary of the frequency band 1, and the lower boundary of the transmitted signal does not exceed a lower boundary of the frequency band 1. Certainly, a case in which the first available frequency band is another frequency band is similar.

According to the embodiment shown in FIG. 26, selection of a transmission frequency band of the detection apparatus can be standardized, so that detection apparatuses with different orientation ranges use different frequency bands to transmit signals, thereby reducing interference between the detection apparatuses.

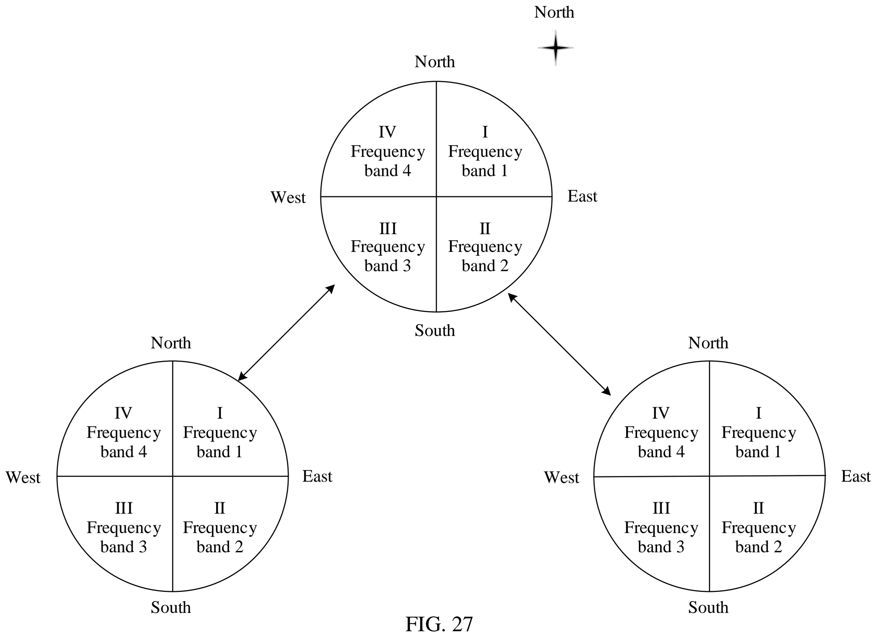

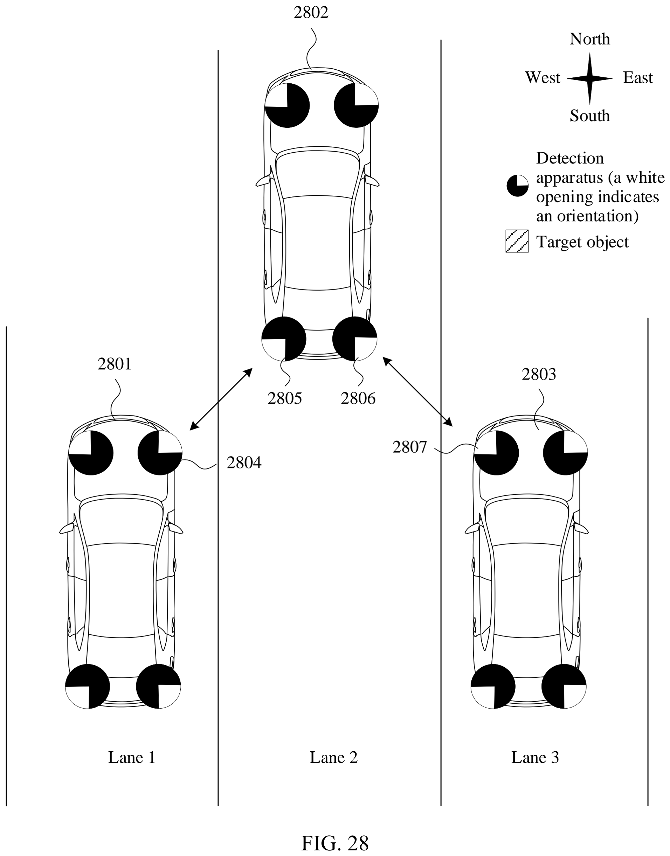

Refer to FIG. 27 and FIG. 28. FIG. 27 is a diagram of a correspondence between a frequency band and an orientation range according to an embodiment of this application. FIG. 28 is a diagram of a scenario of a signal transmission method according to an embodiment of this application. The correspondence between the orientation range and the frequency band is the correspondence shown in FIG. 14. A direction of the orientation range I is opposite to a direction of the orientation range III. The two operation ranges respectively correspond to different frequency bands. With reference to FIG. 28, an orientation of a detection apparatus 2804 on a vehicle 2801 falls within an orientation range I, and therefore the detection apparatus 2804 transmits a signal on a frequency band 1; and an orientation of a detection apparatus 2805 on a vehicle 2802 falls within an orientation range III, and therefore the detection apparatus 2805 transmits a signal on a frequency band 3. Therefore, the orientation of the detection apparatus 2804 is opposite to the orientation of the detection apparatus 2805, but operating frequency bands of the two detection apparatuses are different. In this way, mutual signal interference between the two detection apparatuses can be avoided, and interference to the detection apparatus 2804 and the detection apparatus 2805 can be reduced.

Similarly, an orientation of a detection apparatus 2806 on the vehicle 2802 is opposite to an orientation of a detection apparatus 2807 on a vehicle 2803, but the two detection apparatuses transmit signals respectively by using a frequency band 2 and a frequency band 4, thereby avoiding mutual signal interference between the two detection apparatuses.

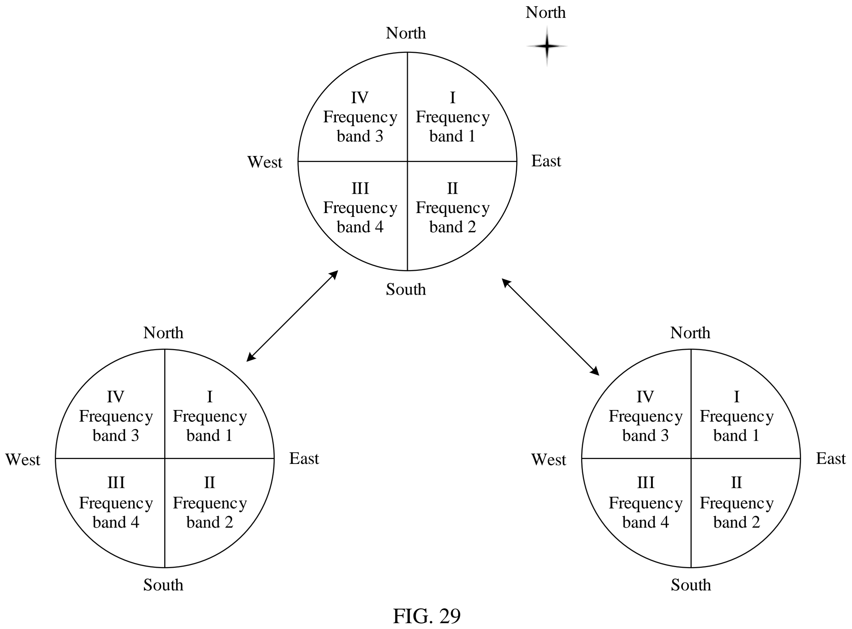

Certainly, the foregoing uses the correspondence between the orientation range and the frequency band shown in FIG. 14 as an example for description. Other correspondences are also used in this application. For example, FIG. 29 is a diagram of a correspondence between a frequency band and an orientation range according to an embodiment of this application. With reference to FIG. 28 and FIG. 29, the detection apparatus 2804 transmits a signal on a frequency band 1, and the detection apparatus 2805 transmits a signal on a frequency band 4. In this way, mutual signal interference between the two detection apparatuses can be avoided, and interference to the detection apparatus 2804 and the detection apparatus 2805 can be reduced. Similarly, the detection apparatus 2806 and the detection apparatus 2807 respectively use a frequency band 2 and a frequency band 3 to transmit signals, thereby avoiding mutual signal interference between the two detection apparatuses.

**In** a possible implementation, the operating bandwidth of the detection apparatus is less than a bandwidth of the first available frequency band. The detection apparatus may transmit a signal on a part of frequency range (for example, a first frequency range) in the first available frequency band. For example, the operating bandwidth of the detection apparatus is 400 MHz, the first available frequency band is 77 GHz to 78 GHz, and the signal transmission apparatus may transmit a signal on 400 MHz in the first available frequency band. For example, the first frequency range may be 77 GHz to 77.4 GHz, and the signal transmission apparatus transmits a signal on 77 GHz to 77.4 GHz.

In a possible design, interference of the first frequency range is less than interference in a frequency range of a non-first frequency range in the first available frequency band. In other words, the first frequency range is a frequency range with relatively small interference in the first available frequency band, so that interference to the detection apparatus can be further reduced, thereby improving detection accuracy.

In a possible implementation, the detection apparatus may perform interference sensing to determine an interference condition of a part or all of frequency ranges of the first available frequency band. The first frequency range is determined based on the interference condition of the part or all of the frequency ranges of the first available frequency band. A bandwidth of the first frequency range is equal to the operating bandwidth of the detection apparatus.

For example, the detection apparatus determines interference conditions of all frequency ranges of the first available frequency band, and selects, as the first frequency range, a frequency range on which interference is the smallest and whose bandwidth is the operating bandwidth. In this case, the detection apparatus may select a frequency range with minimum interference as the operating frequency band, thereby improving detection accuracy.

For another example, the detection apparatus determines a frequency range of the first available frequency band as a frequency range (referred to as a to-be-measured frequency range) of the operating bandwidth. If interference on the to-be-measured frequency range satisfies a preset condition, the to-be-measured frequency range is used as the first frequency range. Further, if interference on the to-be-measured frequency range does not satisfy a preset condition, a frequency range whose bandwidth is the operating bandwidth is newly selected from the first available frequency band. The preset condition is a condition used for selecting the operating frequency band of the detection apparatus. For example, strength of an interference signal is less than a preset strength threshold. For another example, a frequency range in which strength of an interference signal exceeds a preset strength threshold is less than a preset bandwidth. In this case, the detection apparatus may spend less time in sensing, thereby reducing a sensing time and improving working efficiency.

In still another possible design, the first frequency range is a frequency range away from the first frequency band in the first available frequency band. The first frequency band is a frequency band corresponding to an orientation range with an opposite direction. This design can further reduce the frequency band difference between orientation ranges with opposite directions, reduce interference between detection apparatuses, and improve detection accuracy.

As shown in FIG. 15, the first available frequency band is the frequency band 1 corresponding to the orientation range I, and the first frequency band is the frequency band 4 corresponding to the orientation range III. Away means that in the first available frequency band, a frequency difference between the first frequency range and the first frequency band is the largest. For example, the total available frequency band is 77 GHz to 81 GHz, the frequency band 1 is 77 GHz to 78 GHz, and the frequency band 3 is 79 GHz to 80 GHz. If the operating bandwidth of the detection apparatus is 600 MHz, the first frequency range may be a frequency range that is in 77 GHz to 78 GHz and that has the largest difference from the frequency range of 79 GHz to 80 GHz. In other words, the first frequency range is 77 GHz to 77.6 GHz.

Optionally, the foregoing two designs of the first frequency range may be combined. For example, interference is preferentially considered when the first frequency range is selected, and when interference is the same or similar, a frequency range away from a frequency band corresponding to an opposite orientation range is selected.

As mentioned above, the orientation of the detection apparatus may change. In some scenarios, when the detection apparatus falls into a new orientation range, because the new orientation range may correspond to a different resource (including a frequency resource), the signal transmission apparatus may switch a resource occupied for transmitting a signal. For example, the signal transmission apparatus may switch a frequency band.

In a possible implementation, the signal transmission apparatus determines, based on a current orientation of the detection apparatus, a second available frequency band for transmitting a signal by the detection apparatus. As shown in FIG. 14, the orientation of the detection apparatus is in the orientation range I before, and the signal transmission apparatus may transmit a signal on the frequency band 1; and when the current orientation of the detection apparatus falls within the orientation range II, the signal transmission apparatus may transmit a signal on the frequency band 2.

Optionally, the signal transmission apparatus may periodically or aperiodically determine, based on an orientation, a frequency band for transmitting a signal. For example, the signal transmission apparatus determines an available frequency band based on the orientation every first duration, for example, determines, every 10 seconds (s), a frequency band for transmitting a signal.

In a possible implementation, a switching condition may be predefined or pre-specified in the signal transmission apparatus. When the switching condition is satisfied, the signal transmission apparatus determines, based on the current orientation of the detection apparatus, the second available frequency band for transmitting a signal by the detection apparatus. For example, the switching condition may be a threshold by which the orientation of the detection apparatus deviates from an original orientation range, or the switching condition may be a duration in which the orientation deviates from an original orientation range.

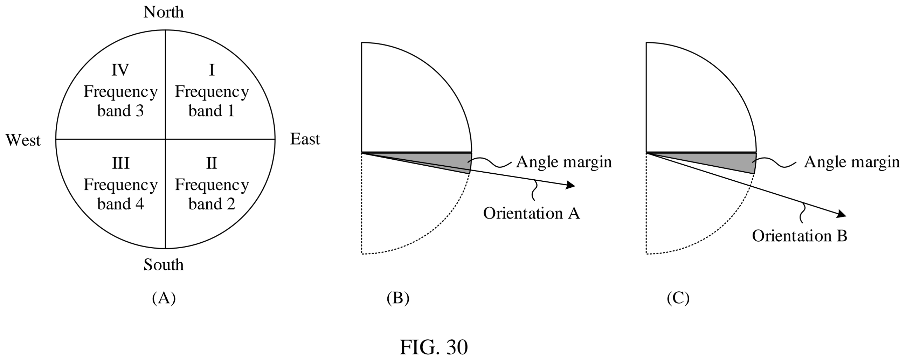

For example, the second available frequency band for transmitting a signal by the detection apparatus is determined based on a current orientation of the detection apparatus, if an offset of the orientation of the detection apparatus relative to the first orientation range is greater than an offset threshold. Signal transmission is performed on the second available frequency band. FIG. 30 is a diagram of a frequency band switching condition according to an embodiment of this application. (A) part of FIG. 30 shows a correspondence between an orientation range and a frequency band (the correspondence shown in FIG. 14 is used as an example). As shown in (B) part of FIG. 30, an angle margin is further set outside a boundary of an orientation range I, and an angle width between the angle margin and the orientation range I is an offset threshold. When the orientation of the detection apparatus is an orientation A, although the orientation of the detection apparatus deviates from the orientation range I, the orientation is still within the angle margin, that is, an offset of the direction A relative to the orientation range I is less than the offset threshold. In this case, the signal transmission apparatus still uses a frequency band 1 to transmit a signal.

As shown in (C) part of FIG. 30, when the orientation of the detection apparatus is an orientation B, the orientation of the detection apparatus deviates from the orientation range I, and exceeds the angle margin, that is, an offset of the orientation B relative to the orientation range I is greater than the offset threshold. In this case, the signal transmission apparatus uses a frequency band 2 as the second available frequency band based on the orientation of the detection apparatus, and transmits a signal on the frequency band 2.

Further, a time threshold is further set in some scenarios. The second available frequency band for transmitting a signal by the detection apparatus is determined based on the current orientation of the detection apparatus, if the offset of the orientation of the detection apparatus relative to the first orientation range is greater than the offset threshold and a duration is greater than the time threshold. For example, the offset threshold is 15°, and the time threshold is 0.5s. Frequency resource switching is performed when the orientation of the detection apparatus crosses a boundary by 15° from an original residence orientation range and continuously crosses the boundary for 0.5s. Otherwise, a frequency band corresponding to the original residence orientation range is retained.

In a possible implementation, when the orientation of the detection apparatus crosses a boundary from an original residence orientation range, the signal transmission apparatus may perform interference sensing on a frequency band corresponding to an orientation range of the current orientation, to obtain an interference condition. If the detection apparatus performs frequency band switching, detection may be performed on a new frequency band in time, thereby improving detection efficiency.

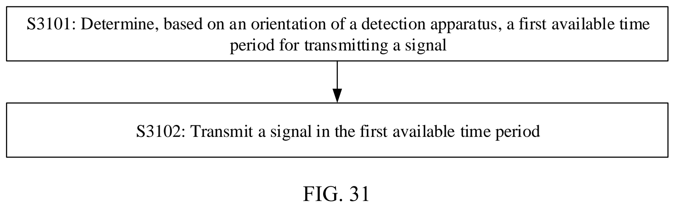

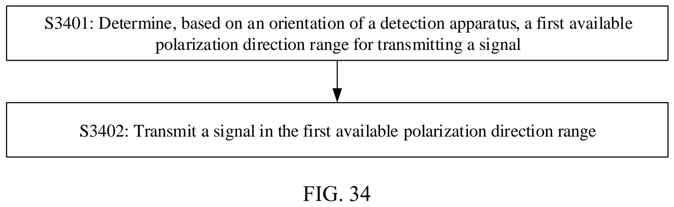

The foregoing describes a transmission method by using a frequency resource as an example. In some scenarios, a resource such as the first time period or the first polarization direction range may be further determined based on the orientation, to transmit a signal on the corresponding resource. With reference to FIG. 31 and FIG. 34, the following continues to describe a signal transmission method provided in embodiments of this application. It should be noted that for logic and possible designs below, reference may be made to the foregoing descriptions in an embodiment shown in FIG. 26.

Refer to FIG. 31. FIG. 31 is a flowchart of another signal transmission method according to an embodiment of this application. Optionally, the method may be implemented based on the detection apparatus shown in FIG. 4.

The signal transmission method shown in FIG. 31 may include one or more steps of step S3101 and step S3102. It should be understood that, for ease of description, an order from S3101 to S3102 is used for description, but this is not intended to constitute a limitation that the method is necessarily performed in the foregoing order. An execution order, an execution time, a quantity of execution times, and the like of the foregoing one or more steps are not limited in embodiments of this application. Steps S3101 and S3102 are specifically as follows:

Step S3101: A signal transmission apparatus determines, based on an orientation of a detection apparatus, a first available time period for transmitting a signal.

The first available time period is one of S (S is an integer greater than 1) time periods of a total available frequency band of the detection apparatus. Optionally, time widths of the S time periods are the same. For descriptions of S frequency bands, refer to the foregoing descriptions.

In a possible implementation, the S time periods overlap, or the S time periods do not overlap. In this way, a signal transmission requirement of a large-time-width detection apparatus can be satisfied, thereby improving flexibility in determining a time period and improving detection performance.

The S time periods respectively correspond to N orientation ranges. For a correspondence between the S time periods and the N orientation ranges, refer to related descriptions such as FIG. 20 or FIG. 22.

For detailed description, refer to the descriptions of a frequency direction in step S2601.

Step S3102: The signal transmission apparatus transmits a signal in the first available time period.

Neither an upper boundary nor a lower boundary of a time domain resource occupied by the transmitted signal exceeds the first time period. As shown in FIG. 19, the first available time period is, for example, a time period 1, and both the upper boundary and the lower boundary of the time domain resource occupied by the transmitted signal are within the time period 1. In other words, an earliest moment of the time period occupied by the transmitted signal is not earlier than a left boundary of the time period 1, and a latest moment of the transmitted signal is not later than a right boundary of the time period 1. Certainly, a case in which the first available time period is another time period is similar.

According to the embodiment shown in FIG. 31, selection of a transmission time period of the detection apparatus can be standardized, so that detection apparatuses with different orientation ranges use different time periods to transmit signals, thereby reducing interference between the detection apparatuses.

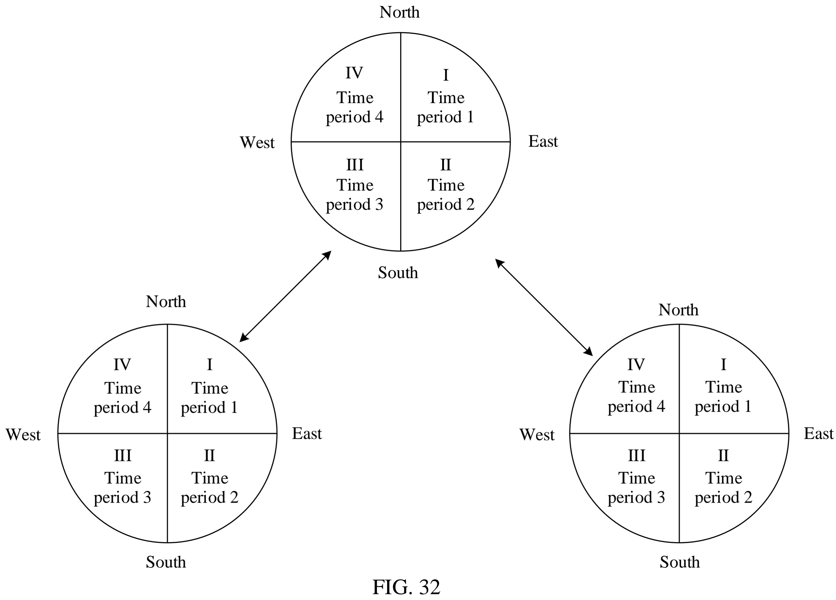

Refer to FIG. 32. FIG. 32 is a diagram of a correspondence between a frequency band and an orientation range according to an embodiment of this application. FIG. 28 is a diagram of a scenario of a signal transmission method according to an embodiment of this application. With reference to FIG. 32 and FIG. 28, the detection apparatus 2804 transmits a signal in a time period 1, and the detection apparatus 2805 transmits a signal in a time period 3, because the time period 1 and the time period 3 are different time ranges. Therefore, when the detection apparatus 2804 transmits/receives a signal, the detection apparatus 2805 does not transmit/receive a signal, thereby avoiding mutual interference between signals of the detection apparatus 2804 and the detection apparatus 2805 and reducing interference to the detection apparatus 2804 and the detection apparatus 2805. Similarly, the detection apparatus 2806 and the detection apparatus 2807 respectively use a time period 2 and a time period 4 to transmit signals, thereby avoiding mutual signal interference between the two detection apparatuses.

In a possible implementation, an operating time width of the detection apparatus is less than a time width of the first available time period, and the detection apparatus may transmit a signal in a part of a time range of the first available time period. For related descriptions, refer to the descriptions of the first time period.

In a possible implementation, in some scenarios, when the detection apparatus falls into a new orientation range, the signal transmission apparatus may switch a time period.

In a possible implementation, the signal transmission apparatus determines, based on a current orientation of the detection apparatus, a second available time period for transmitting a signal by the detection apparatus. For related descriptions, refer to the foregoing descriptions. Details are not described herein again.

In some possible designs, the embodiment shown in FIG. 31 may be combined with the embodiment shown in FIG. 26. Specifically, the signal transmission apparatus determines a first available frequency band and the first available time period (optionally, separately determined in different steps) based on the orientation of the detection apparatus, and transmits a signal on the first available frequency band in the first available time period.

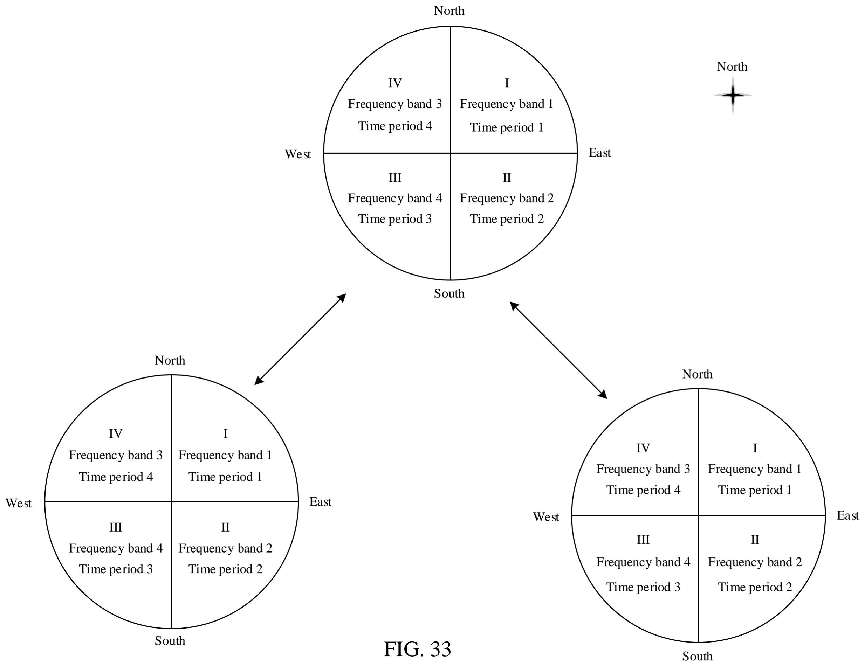

Refer to FIG. 33. FIG. 33 is a diagram of a scenario of a signal transmission method according to an embodiment of this application. The signal transmission apparatus may determine a frequency band 1 and a time period 1 based on the orientation (for example, falling into an orientation range I) of the detection apparatus, and transmit a signal on the frequency band 1 in the time period 1.

With reference to FIG. 28, the detection apparatus 2804 transmits a signal on the frequency band 1 in the time period 1; and the detection apparatus 2805 transmits a signal on the frequency band 4 in the time period 3. Because the time period 1 and the time period 3 are different time ranges, and the frequency band 1 and the frequency band 4 are different frequency ranges, a resource difference between the detection apparatus 2804 and the detection apparatus 2805 is further increased, thereby avoiding mutual signal interference between the two detection apparatuses. Similarly, the detection apparatus 2806 uses the frequency band 2 and the time period 2 to transmit a signal, and the detection apparatus 2807 uses the frequency band 3 and the time period 4 to transmit a signal, thereby avoiding mutual signal interference between the two detection apparatuses.

In addition, in FIG. 28, a frequency difference between adjacent orientation ranges is merely a difference of one to two units, and a time domain difference is also only a difference of one unit. This helps improve resource switching efficiency and improve detection quality.

Refer to FIG. 34. FIG. 34 is a flowchart of another signal transmission method according to an embodiment of this application. Optionally, the method may be implemented based on the detection apparatus shown in FIG. 4.

The signal transmission method shown in FIG. 31 may include one or more steps of step S3401 and step S3402. It should be understood that, for ease of description, an order from S3401 to S3402 is used for description, but this is not intended to constitute a limitation that the method is necessarily performed in the foregoing order. An execution order, an execution time, a quantity of execution times, and the like of the foregoing one or more steps are not limited in embodiments of this application. Steps S3401 and S3402 are specifically as follows:

Step S3401: A signal transmission apparatus determines, based on an orientation of a detection apparatus, a first available polarization direction range for transmitting a signal.

The first available polarization direction range is one of P (P is an integer greater than 1) polarization direction ranges in a total available polarization direction range of the detection apparatus. Optionally, widths of the P polarization direction ranges are the same. For descriptions of the P frequency bands, refer to the foregoing descriptions.

In a possible implementation, the P polarization direction ranges overlap, or the P polarization direction ranges do not overlap. In this way, when a width of a polarization direction range required by the detection apparatus is relatively large, a requirement can be still satisfied, thereby improving flexibility and improving detection performance.

The P polarization direction ranges separately correspond to the N orientation ranges. For a correspondence between the P polarization direction ranges and the N direction ranges, refer to related descriptions such as FIG. 20 or FIG. 22.

For detailed description, refer to the descriptions of a frequency direction in step S3401.

Step S3402: The signal transmission apparatus transmits a signal in a first available polarization direction range.

Neither an upper boundary nor a lower boundary of a polarization direction used by the transmitted signal exceeds the first polarization direction range. As shown in FIG. 23, the first available polarization direction range is, for example, the polarization direction range 1, and the polarization direction occupied by the transmitted signal is within the polarization direction range 1. Certainly, a case in which the first available polarization direction range is another polarization direction range is similar.

According to the embodiment shown in FIG. 34, selection of a transmission polarization direction range of the detection apparatus can be standardized, so that detection apparatuses with different orientation ranges use different polarization direction ranges to transmit signals, thereby reducing interference between the detection apparatuses.

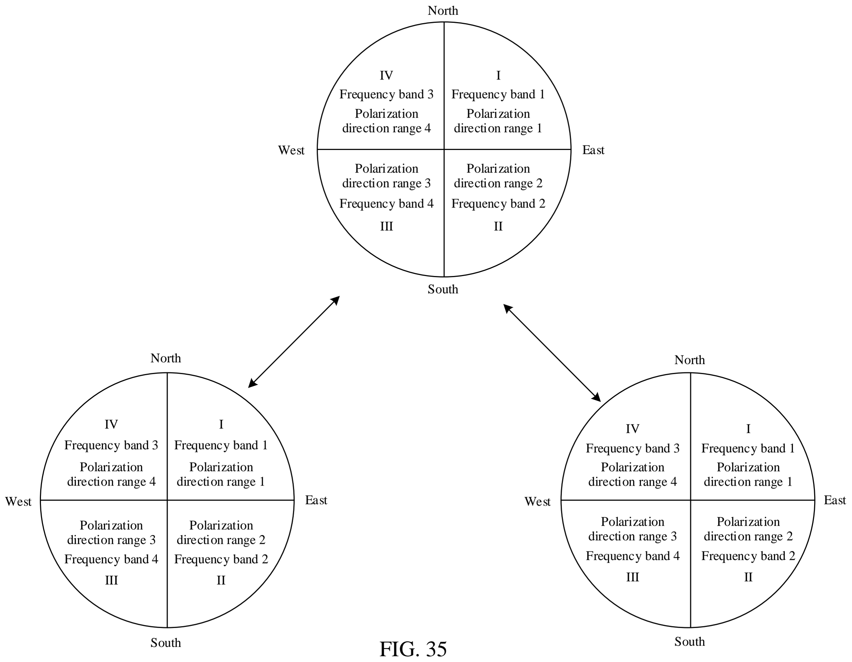

Refer to FIG. 35. FIG. 35 is a diagram of a correspondence between a frequency band and an orientation range according to an embodiment of this application. With reference to FIG. 35 and FIG. 28, the detection apparatus 2804 and the detection apparatus 2805 use different frequency bands and polarization direction ranges to transmit signals, thereby avoiding mutual signal interference between the two detection apparatuses. Similarly, the detection apparatus 2806 and the detection apparatus 2807 also use different frequency bands and polarization direction ranges to transmit signals, thereby avoiding mutual signal interference between the two detection apparatuses.

For descriptions of some possible implementations, refer to the foregoing descriptions. Details are not described herein again.

In some possible designs, the embodiment shown in FIG. 34 may be combined with the embodiment shown in FIG. 26 and/or the embodiment shown in FIG. 34.

For example, the signal transmission apparatus determines the first available frequency band and the first available polarization direction range (optionally, determined in different steps) based on the orientation of the detection apparatus, and transmits a signal on the first available frequency band in the first polarization direction range.

For another example, the signal transmission apparatus determines the first available frequency band, the first available time period, and the first available polarization direction range (optionally, determined in different steps) based on the orientation of the detection apparatus, and transmits a signal on the first available frequency band in the first available time period in the first polarization direction range.

For detailed descriptions, refer to the foregoing descriptions. Details are not described herein again.

The following describes an apparatus for implementing the foregoing signal transmission method.

It should be understood that, in the apparatus provided in this embodiment of this application, unit division is merely logical function division. In actual implementation, all or a part of the units may be integrated into one physical entity, or may be physically separated. In addition, the units in the apparatus may be implemented in a form of invoking software by a processor. For example, the apparatus includes the processor. The processor is connected to a memory. The memory stores instructions. The processor invokes the instructions stored in the memory, to implement any one of the foregoing methods or implement functions of each unit of the apparatus. For example, the processor is a general-purpose processor, for example, a central processing unit (Central Processing Unit, CPU) or a microprocessor. The memory is a memory inside the apparatus or a memory outside the apparatus. Alternatively, the units in the apparatus may be implemented in a form of a hardware circuit, and functions of a part or all of the units may be implemented by designing the hardware circuit. The hardware circuit may be understood as one or more processors. For example, in an implementation, the hardware circuit is an application-specific integrated circuit (application-specific integrated circuit, ASIC), and the functions of a part or all of the units are implemented by designing a logical relationship between elements in the circuit. For another example, in another implementation, the hardware circuit may be implemented by a programmable logic device (programmable logic device, PLD). For example, a field-programmable gate array (Field-Programmable Gate Array, FPGA) may include a large quantity of logic gate circuits, and a connection relationship between the logic gate circuits is configured by using a configuration file, to implement functions of a part or all of the units. All units of the foregoing apparatuses may be implemented in a form of software invoked by the processor; or all units may be implemented in a form of the hardware circuit; or a part of units may be implemented in a form of software invoked by the processor, and a remaining part may be implemented in a form of the hardware circuit.

It can be learned that each unit of the following apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or a part of the units of the apparatus may be integrated, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

The following lists two possible apparatuses.

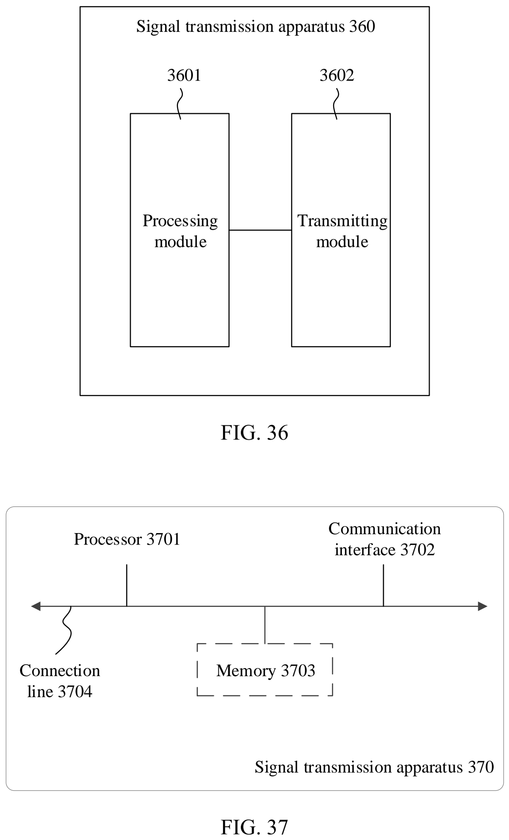

Refer to FIG. 36. FIG. 36 is a diagram of a structure of a signal transmission apparatus according to an embodiment of this application. The signal transmission apparatus 360 includes a processing module 3601 and a transmitting module 3602. The processing module 3601 may be configured to perform operations such as determining, calculation, generation, and detection, and/or configured to support another process in the foregoing embodiment. The transmitting module 3602 may be configured to participate in a signal transmission process that includes but is not limited to signal generation, modulation, transmission, and the like.

Optionally, the signal transmission apparatus 360 may be an independent device, or may be a component included in an independent device (for example, the detection apparatus 40), for example, a chip, a software module, or an integrated circuit. The signal transmission apparatus 360 is configured to implement the foregoing signal transmission method, for example, the signal transmission methods shown in FIG. 26, FIG. 31, and FIG. 34.

In a possible implementation, the processing module 3601 is configured to determine, based on an orientation of a detection apparatus, a first available frequency band for transmitting a signal by the detection apparatus. The transmitting module 3602 is configured to transmit a signal on the first available frequency band.

The first available frequency band is one of N frequency bands of a total available frequency band of the detection apparatus. The N frequency bands respectively correspond to N orientation ranges. For details, refer to the foregoing description.

In a possible implementation, a distribution status of the N frequency bands is related to a transmission bandwidth requirement range of the detection apparatus. The distribution status herein includes whether the N frequency bands overlap, whether sizes of the N frequency bands are uniform, whether a spacing exists between the N frequency bands, and the like.

In a possible implementation, bandwidths of the N frequency bands are the same.

In a possible implementation, the N frequency bands overlap. Optionally, that a distribution status of the N frequency bands is related to a transmission bandwidth requirement range of the detection apparatus includes: when the transmission bandwidth requirement range of the detection apparatus is greater than 1/N of the total available frequency band of the detection apparatus, the N frequency bands overlap.

In a possible implementation, an overlapping range exists between edge parts of any two adjacent frequency bands in the N frequency bands.

In a possible implementation, when the transmission bandwidth requirement range of the detection apparatus is less than 1/N of the total available frequency band of the detection apparatus, the N frequency sub-bands do not overlap.

In a possible implementation, the total available frequency band includes M frequency sub-bands, the M frequency sub-bands do not overlap, M is an integer, and M>N. Each of the N frequency bands occupies K consecutive frequency sub-bands of the M frequency sub-bands. Frequency spacings between center frequencies of the N frequency bands are the same.

In a possible implementation, K=M-N+1, and an overlapping range of any two adjacent frequency bands of the N frequency bands is M-N frequency sub-bands.

In a possible implementation, M, N, the transmission bandwidth requirement range $B_w$ of the detection apparatus, and the total available frequency band $B_{band}$ of the detection apparatus satisfy the following formula:

$$\frac{M-N}{M-1} B_{band} < B_w \leq \frac{M-N+1}{M} B_{band}.$$

In a possible implementation, a sum of the N orientation ranges is 360°.

In a possible implementation, N=4, and each of the four orientation ranges occupies 90°. For example, the N orientation ranges are obtained through division by using four basic bearings as boundaries, and the four basic bearings are east, south, west, and north.

In a possible implementation, three-dimensional steering space is, for example, 360° in a horizontal direction and 180° in a vertical direction.

In a possible implementation, in the N orientation ranges, center frequencies of frequency bands corresponding to N/2 orientation ranges that are passed through in a clockwise direction starting from a first orientation sequentially change.

Center frequencies of frequency bands corresponding to N/2 orientation ranges that are passed through in an anticlockwise direction starting from the first orientation sequentially change.

The sequentially changing is sequentially ascending or sequentially descending.

In a possible implementation, in the N orientation ranges, center frequencies of frequency bands corresponding to the N orientation ranges that are passed through in a clockwise direction starting from a first orientation sequentially change, and the sequentially changing is sequentially ascending or sequentially descending.

In a possible implementation, the transmitting module 3602 is further configured to transmit the detection signal on a first frequency range, where the first frequency band is included in the first available frequency band.

Optionally, interference of the first frequency range is less than interference in a frequency range of a non-first frequency range in the first available frequency band.

Optionally, the first frequency range is a frequency range away from the first frequency band in the first available frequency band, the first frequency band is a frequency band corresponding to a first orientation range in the N orientations, and a reverse direction of the orientation of the detection apparatus falls within the first orientation range.

In a possible implementation, the processing module 3601 is further configured to determine, based on an orientation of a detection apparatus, a first available time period for transmitting a signal by the detection apparatus. Further, the transmitting module 3602 is configured to transmit the signal on the first available frequency band in the first available time period.

The first available time period is one of S time periods of a total available time period of the detection apparatus, S≤N, and one of the S time periods corresponds to at least one of the N orientation ranges.

In a possible implementation, when a transmission time width requirement range of the detection apparatus is greater than 1/S of the total available time period of the detection apparatus, the S time periods overlap; or when a transmission time width requirement range of the detection apparatus is less than 1/S of the total available time period of the detection apparatus, the S time periods do not overlap.

In a possible implementation, the N orientation ranges include a second orientation range and a third orientation range, a direction of the first orientation range is opposite to a direction of the second orientation range, and a resource difference between the second orientation range and the third orientation range is greater than a first threshold.

The second orientation range corresponds to a second frequency band and a first time period. The third orientation range corresponds to a third frequency band and a second time period. The resource difference is related to a difference between the first frequency band and the third frequency band and a difference between the first time period and the second time period.

The second frequency band and the third frequency band belong to the N frequency bands. The first time period and the second time period belong to the S time periods.

In a possible implementation, the resource difference between the second orientation range and the third orientation range is greater than a difference of X units, X is an integer, and X≥2.

The N frequency bands are arranged according to a change order of the center frequencies of the N frequency bands. A difference between an $i^{th}$ frequency band and a $j^{th}$ frequency band is (j-i) units, where i and j are both integers greater than 0, and j≥i.

The S time periods are arranged according to a change order of center moments of the S time periods. A difference between an $h^{th}$ time period and an $l^{th}$ time period satisfies the following formula:

$$\Delta t = min[(l - h), (h + S - l)],$$

where

h and l are both integers greater than 0, and l≥h.

In a possible implementation, the processing module 3601 is further configured to determine, based on the orientation of the detection apparatus, a first available polarization direction range for transmitting a signal by the detection apparatus.

The first available polarization direction range is one of P polarization direction ranges of a total available polarization direction range of the detection apparatus, P≤N, and one of the P polarization direction ranges corresponds to at least one of the N orientation ranges.

Further, the transmitting module 3602 is further configured to transmit the signal on the first available frequency band in the first available polarization direction range.

In a possible implementation, the orientation of the detection apparatus belongs to a fourth orientation range in the N orientation ranges. The processing module 3601 is further configured to determine, based on a current orientation of the detection apparatus, a second available frequency band for transmitting a signal by the detection apparatus, if an offset of the orientation of the detection apparatus relative to the fourth orientation range is greater than an offset threshold.

Further, the transmitting module 3602 is further configured to transmit a signal on the second available frequency band.

In a possible implementation, the processing module 3601 is further configured to determine, based on the current orientation of the detection apparatus, the second available frequency band for transmitting a signal by the detection apparatus, if the offset of the orientation of the detection apparatus relative to the fourth orientation range is greater than the offset threshold and a duration is greater than a time threshold.

Refer to FIG. 37. FIG. 37 is a diagram of a possible structure of a signal transmission apparatus 370 according to an embodiment of this application. The signal transmission apparatus 370 may include at least one processor 3701 and a communication interface 3702. Optionally, the signal transmission apparatus may further include at least one memory 3703. Further, optionally, the signal transmission apparatus may further include a connection line 3704. The processor 3701, the communication interface 3702, and/or the memory 3703 are connected through the connection line 3704 and communicate with each other through the connection line 3704, to transfer a control signal and/or a data signal. Optionally, the signal transmission apparatus 370 may be an independent device, for example, an ECU or a telematics box (T-box), or may be a component included in an independent device, for example, a chip, a software module, or an integrated circuit.

Herein,

(1) The processor 3701 is a module for performing an arithmetic operation and/or a logical operation, and may specifically include one or more of the following apparatuses: a CPU, an MCU, a GPU, an MPU, an ASIC, an FPGA, a CPLD, a coprocessor (assisting the central processing unit in completing corresponding processing and application), an NPU, and/or the like.

(2) The communication interface 3702 may be configured to provide information input or output for the at least one processor. In some possible scenarios, the communication interface 3702 may include an interface circuit, and/or the communication interface 3702 may be configured to receive data sent from the outside and/or send data to the outside. For example, the communication interface 3702 may be a wired link interface including an Ethernet cable and the like, or may be a wireless link (Wi-Fi, Bluetooth, universal wireless transmission, an onboard short-range communication technology, another short-range wireless communication technology, and the like) interface. Optionally, the communication interface 3702 may further include a transmitter (for example, a radio frequency transmitter or an antenna), a receiver, or the like that is coupled to the interface.

Optionally, if the signal transmission apparatus 370 is an independent device, the communication interface 3702 may include a receiver and a transmitter. The receiver and the transmitter may be a same component or different components. When the receiver and the transmitter are the same component, the component may be referred to as a transceiver.

Optionally, if the signal transmission apparatus 370 is a chip or a circuit, the communication interface 3702 may include an input interface and an output interface, and the input interface and the output interface may be a same interface or different interfaces.

Optionally, a function of the communication interface 3702 may be implemented by using a transceiver circuit or a dedicated transceiver chip. The processor 3701 may be implemented by using a dedicated processing chip, a processing circuit, a processor, or a general-purpose chip.

(3) The memory 3703 is configured to provide storage space, and the storage space may store data such as an operating system and a computer program. The memory 3703 may be one or a combination of a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like.

Functions and actions of modules or units in the signal transmission apparatus 370 listed above are merely examples for description.

Functional units in the signal transmission apparatus 370 may be configured to implement the foregoing signal transmission method. Herein, detailed descriptions are omitted to avoid repetition.

Optionally, the processor 3701 may be a processor (referred to as a dedicated processor for ease of differentiation) that is specially configured to perform the foregoing method, or may be a processor (referred to as a dedicated processor for ease of differentiation) that invokes a computer program to perform the foregoing method. Optionally, at least one processor may further include both a dedicated processor and a general-purpose processor.

Optionally, when a computing device includes at least one memory 3703, if the processor 3701 invokes a computer program to implement the foregoing signal transmission method, the computer program may be stored in the memory 3703.

An embodiment of this application further provides a chip system. The chip system includes a processor and a communication interface. The communication interface is configured to receive and/or send data, and/or the communication interface is configured to provide input and/or output for the processor. The chip system is configured to implement the foregoing signal transmission method, for example, the signal transmission methods shown in FIG. 26, FIG. 31, and FIG. 34.

An embodiment of this application further provides a terminal. The terminal includes the foregoing signal transmission apparatus, for example, includes the signal transmission apparatus 350 or the signal transmission apparatus 360.

In a possible implementation, the terminal may be an intelligent terminal or transportation means such as a vehicle, an unmanned aerial vehicle, or a robot.

An embodiment of this application further provides a computer-readable storage medium. The computer-readable storage medium stores instructions. When the instructions are run on at least one processor, the foregoing signal transmission method is implemented, for example, the signal transmission methods shown in FIG. 26, FIG. 31, and FIG. 34.

An embodiment of this application further provides a computer program product. The computer program product includes computer instructions. When the computer program product is executed by a computing device, the foregoing signal transmission method is implemented, for example, the signal transmission methods shown in FIG. 26, FIG. 31, and FIG. 34.

A person of ordinary skill in the art may understand that all or a part of the steps of embodiments may be implemented by hardware or a program instructing related hardware. The program may be stored in a computer-readable storage medium. The storage medium may be a read-only memory, a magnetic disk, an optical disc, or the like.

## Claims

1. A signal transmission method, applied to a detection apparatus, wherein the method comprises:

   determining, based on an orientation of the detection apparatus, a first available frequency band for transmitting a signal by the detection apparatus, wherein
   the first available frequency band is one of N frequency bands of a total available frequency band of the detection apparatus, the N frequency bands have same bandwidths, the N frequency bands respectively correspond to N orientation ranges, and N is an integer greater than 1; and
   when a transmission bandwidth requirement range of the detection apparatus is greater than 1/N of the total available frequency band of the detection apparatus, the N frequency bands overlap; and
   transmitting a signal on the first available frequency band.

2. The method according to claim 1, wherein that the N frequency bands overlap comprises:
   an overlapping range exists between edge parts of any two adjacent frequency bands in the N frequency bands.

3. The method according to claim 1, wherein when the transmission bandwidth requirement range of the detection apparatus is less than 1/N of the total available frequency band of the detection apparatus, the N frequency bands do not overlap.

4. The method according to claim 1 or 2, wherein the total available frequency band comprises M frequency sub-bands, the M frequency sub-bands do not overlap, M is an integer, and M>N; and

each of the N frequency bands occupies K consecutive frequency sub-bands of the M frequency sub-bands, and frequency spacings between center frequencies of the N frequency bands are the same.

5. The method according to claim 4, wherein K=M-N+1, and an overlapping range of any two adjacent frequency bands of the N frequency bands is M-N frequency sub-bands.

6. The method according to claim 5, wherein M, N, the transmission bandwidth requirement range $B_w$ of the detection apparatus, and the total available frequency band $B_{band}$ of the detection apparatus satisfy the following formula:

$$\frac{M-N}{M-1} B_{band} < B_w \leq \frac{M-N+1}{M} B_{band}.$$

7. The method according to any one of claims 1 to 6, wherein a sum of the N orientation ranges is 360°; and
N=4, and each of the N orientation ranges occupies 90°.

8. The method according to claim 7, wherein the N orientation ranges are obtained through division by using four basic bearings as boundaries, and the four basic bearings are east, south, west, and north.

9. The method according to any one of claims 1 to 8, wherein in the N orientation ranges, center frequencies of frequency bands corresponding to N/2 orientation ranges that are passed through in a clockwise direction starting from a first orientation sequentially change;

center frequencies of frequency bands corresponding to N/2 orientation ranges that are passed through in an anticlockwise direction starting from the first orientation sequentially change; and
the sequentially changing is sequentially ascending or sequentially descending.

10. The method according to any one of claims 1 to 8, wherein in the N orientation ranges, center frequencies of frequency bands corresponding to the N orientation ranges that are passed through in a clockwise direction starting from a first orientation sequentially change, and the sequentially changing is sequentially ascending or sequentially descending.

11. The method according to any one of claims 1 to 10, wherein the transmitting a signal on the first available frequency band comprises:

transmitting the detection signal on a first frequency range, wherein the first frequency band is comprised in the first available frequency band, and
interference of the first frequency range is less than interference in a frequency range of a non-first frequency range in the first available frequency band, and/or the first frequency range is a frequency range away from the first frequency band in the first available frequency band, the first frequency band is a frequency band corresponding to a first orientation range in the N orientations, and a reverse direction of the orientation of the detection apparatus falls within the first orientation range.

12. The method according to any one of claims 1 to 11, wherein the method further comprises:

determining, based on the orientation of the detection apparatus, a first available time period for transmitting a signal by the detection apparatus, wherein
the first available time period is one of S time periods of a total available time period of the detection apparatus, S≤N, and one of the S time periods corresponds to at least one of the N orientation ranges; and
the transmitting a signal on the first available frequency band comprises:
transmitting the signal on the first available frequency band in the first available time period.

13. The method according to claim 12, wherein

when a transmission time width requirement range of the detection apparatus is greater than 1/S of the total available time period of the detection apparatus, the S time periods overlap; or
when a transmission time width requirement range of the detection apparatus is less than 1/S of the total available time period of the detection apparatus, the S time periods do not overlap.

14. The method according to claim 12 or 13, wherein the N orientation ranges comprise a second orientation range and a third orientation range, a direction of the first orientation range is opposite to a direction of the second orientation range, and a resource difference between the second orientation range and the third orientation range is greater than a first threshold;

the second orientation range corresponds to a second frequency band and a first time period, the third orientation range corresponds to a third frequency band and a second time period, and the resource difference is related to a difference between the first frequency band and the third frequency band and a difference between the first time period and the second time period; and the second frequency band and the third frequency band belong to the N frequency bands, and the first time period and the second time period belong to the S time periods.

15. The method according to claim 14, wherein the resource difference between the second orientation range and the third orientation range is greater than a difference of X units, X is an integer, and X≥2;

the N frequency bands are arranged according to a change order of the center frequencies of the N frequency bands, a difference between an $i^{th}$ frequency band and a $j^{th}$ frequency band is (j-i) units, i and j are both integers greater than 0, and j≥i; and
the S time periods are arranged according to a change order of center moments of the S time periods, and a difference between an $h^{th}$ time period and an $l^{th}$ time period satisfies the following formula:

$$\Delta t = min[(l-h), (h+S-l)],$$

wherein
h and l are both integers greater than 0, and l≥h.

16. The method according to any one of claims 1 to 15, wherein the method further comprises:

determining, based on the orientation of the detection apparatus, a first available polarization direction range for transmitting a signal by the detection apparatus, wherein
the first available polarization direction range is one of P polarization direction ranges of a total available polarization direction range of the detection apparatus, P≤N, and one of the P polarization direction ranges corresponds to at least one of the N orientation ranges; and
the transmitting a signal on the first available frequency band comprises:
transmitting the signal on the first available frequency band in the first available polarization direction range.

17. The method according to any one of claims 1 to 16, wherein the orientation of the detection apparatus belongs to a fourth orientation range in the N orientation ranges; and
the method further comprises:

determining, based on a current orientation of the detection apparatus, a second available frequency band for transmitting a signal by the detection apparatus, if an offset of the orientation of the detection apparatus relative to the fourth orientation range is greater than an offset threshold; and
transmitting a signal on the second available frequency band.

18. The method according to claim 17, wherein the determining, based on a current orientation of the detection apparatus, a second available frequency band for transmitting a signal by the detection apparatus, if an offset of the orientation of the detection apparatus relative to the fourth orientation range is greater than an offset threshold comprises:
determining, based on the current orientation of the detection apparatus, the second available frequency band for transmitting a signal by the detection apparatus, if the offset of the orientation of the detection apparatus relative to the fourth orientation range is greater than the offset threshold and a duration is greater than a time threshold.

19. A signal transmission apparatus, wherein the signal transmission apparatus is comprised in a detection apparatus, and the signal transmission apparatus comprises a processing module and a transmitting module;

the processing module is configured to determine, based on an orientation of the detection apparatus, a first available frequency band for transmitting a signal by the detection apparatus;
the transmitting module is configured to transmit a signal on the first available frequency band;
the first available frequency band is one of N frequency bands of a total available frequency band of the detection apparatus, the N frequency bands have same bandwidths, the N frequency bands respectively correspond to N orientation ranges, and N is an integer greater than 1; and
when a transmission bandwidth requirement range of the detection apparatus is greater than 1/N of the total available frequency band of the detection apparatus, the N frequency bands overlap.

20. The signal transmission apparatus according to claim 19, wherein that the N frequency bands overlap comprises:
an overlapping range exists between edge parts of any two adjacent frequency bands in the N frequency bands.

21. The signal transmission apparatus according to claim 19, wherein when the transmission bandwidth requirement range of the detection apparatus is less than 1/N of the total available frequency band of the detection apparatus,

the N frequency bands do not overlap.

22. The signal transmission apparatus according to claim 19 or 20, wherein the total available frequency band comprises M frequency sub-bands, the M frequency sub-bands do not overlap, M is an integer, and M>N; and

each of the N frequency bands occupies K consecutive frequency sub-bands of the M frequency sub-bands, and frequency spacings between center frequencies of the N frequency bands are the same.

23. The signal transmission apparatus according to claim 22, wherein K=M-N+1, and an overlapping range of any two adjacent frequency bands of the N frequency bands is M-N frequency sub-bands.

24. The signal transmission apparatus according to claim 23, wherein M, N, the transmission bandwidth requirement range $B_w$ of the detection apparatus, and the total available frequency band $B_{band}$ of the detection apparatus satisfy the following formula:

$$\frac{M-N}{M-1} B_{band} < B_w \leq \frac{M-N+1}{M} B_{band}.$$

25. The signal transmission apparatus according to any one of claims 19 to 24, wherein a sum of the N orientation ranges is 360°; and

N=4, and each of the N orientation ranges occupies 90°.

26. The signal transmission apparatus according to claim 25, wherein the N orientation ranges are obtained through division by using four basic bearings as boundaries, and the four basic bearings are east, south, west, and north.

27. The signal transmission apparatus according to any one of claims 19 to 26, wherein in the N orientation ranges, center frequencies of frequency bands corresponding to N/2 orientation ranges that are passed through in a clockwise direction starting from a first orientation sequentially change;

center frequencies of frequency bands corresponding to N/2 orientation ranges that are passed through in an anticlockwise direction starting from the first orientation sequentially change; and

the sequentially changing is sequentially ascending or sequentially descending.

28. The signal transmission apparatus according to any one of claims 19 to 26, wherein in the N orientation ranges, center frequencies of frequency bands corresponding to the N orientation ranges that are passed through in a clockwise direction starting from a first orientation sequentially change, and the sequentially changing is sequentially ascending or sequentially descending.

29. The signal transmission apparatus according to any one of claims 19 to 28, wherein the transmitting module is further configured to transmit the detection signal on a first frequency range, wherein the first frequency band is comprised in the first available frequency band; and

interference of the first frequency range is less than interference in a frequency range of a non-first frequency range in the first available frequency band, and/or the first frequency range is a frequency range away from the first frequency band in the first available frequency band, the first frequency band is a frequency band corresponding to a first orientation range in the N orientations, and a reverse direction of the orientation of the detection apparatus falls within the first orientation range.

30. The signal transmission apparatus according to any one of claims 19 to 29, wherein the processing module is further configured to determine, based on the orientation of the detection apparatus, a first available time period for transmitting a signal by the detection apparatus; and

the transmitting module is further configured to transmit the signal on the first available frequency band in the first available time period, wherein

the first available time period is one of S time periods of a total available time period of the detection apparatus, S≤N, and one of the S time periods corresponds to at least one of the N orientation ranges.

31. The signal transmission apparatus according to claim 30, wherein

when a transmission time width requirement range of the detection apparatus is greater than 1/S of the total available time period of the detection apparatus, the S time periods overlap; or

when a transmission time width requirement range of the detection apparatus is less than 1/S of the total available time period of the detection apparatus, the S time periods do not overlap.

32. The signal transmission apparatus according to claim 30 or 31, wherein the N orientation ranges comprise a second orientation range and a third orientation range, a direction of the first orientation range is opposite to a direction of the second orientation range, and a resource difference between the second orientation range and the third orientation range is greater than a first threshold;

the second orientation range corresponds to a second frequency band and a first time period, the third orientation range corresponds to a third frequency band and a second time period, and the resource difference is related to a difference between the first frequency band and the third frequency band and a difference between the first time period and the second time period; and the second frequency band and the third frequency band belong to the N frequency bands, and the first time period and the second time period belong to the S time periods.

33. The signal transmission apparatus according to claim 32, wherein the resource difference between the second orientation range and the third orientation range is greater than a difference of X units, X is an integer, and X≥2;

the N frequency bands are arranged according to a change order of the center frequencies of the N frequency bands, a difference between an $i^{th}$ frequency band and a $j^{th}$ frequency band is (j-i) units, i and j are both integers greater than 0, and j≥i; and
the S time periods are arranged according to a change order of center moments of the S time periods, and a difference between an $h^{th}$ time period and an $l^{th}$ time period satisfies the following formula:

$$\Delta t = min[(l-h), (h+S-l)],$$

wherein
h and l are both integers greater than 0, and l≥h.

34. The signal transmission apparatus according to any one of claims 19 to 33, wherein the processing module is further configured to determine, based on the orientation of the detection apparatus, a first available polarization direction range for transmitting a signal by the detection apparatus; and

the transmitting module is further configured to transmit the signal on the first available frequency band in the first available polarization direction range, wherein
the first available polarization direction range is one of P polarization direction ranges of a total available polarization direction range of the detection apparatus, P≤N, and one of the P polarization direction ranges corresponds to at least one of the N orientation ranges.

35. The method according to any one of claims 19 to 34, wherein the orientation of the detection apparatus belongs to a fourth orientation range in the N orientation ranges;

the processing module is further configured to determine, based on a current orientation of the detection apparatus, a second available frequency band for transmitting a signal by the detection apparatus, if an offset of the orientation of the detection apparatus relative to the fourth orientation range is greater than an offset threshold; and
the transmitting module is further configured to transmit a signal on the second available frequency band.

36. The method according to claim 35, wherein the processing module is further configured to:
determine, based on the current orientation of the detection apparatus, the second available frequency band for transmitting a signal by the detection apparatus, if the offset of the orientation of the detection apparatus relative to the fourth orientation range is greater than the offset threshold and a duration is greater than a time threshold.

37. A detection apparatus, wherein the detection apparatus comprises the transmitting apparatus according to any one of claims 19 to 36.

38. A terminal, wherein the terminal comprises the transmitting apparatus according to any one of claims 19 to 36, or the detection apparatus according to claim 37.

39. The terminal according to claim 38, wherein the terminal is a vehicle, an unmanned aerial vehicle, or a robot.

40. A computer storage medium, wherein the computer storage medium stores a computer program, and when the computer program is run on a computer, the computer is enabled to perform the method according to any one of claims 1 to 18.

41. A computer program product, wherein the computer program product comprises a computer program, and when the computer program is run on a computer, the computer is enabled to perform the method according to any one of claims 1 to 18.

42. A chip, wherein the chip comprises:
a processor and a communication interface, wherein the processor is configured to invoke and run instructions from the communication interface, and implement the method according to any one of claims 1 to 18 when the processor executes the instructions.

FIG. 1

202

North

West ✛ East

South

⬤ Detection apparatus
(a white opening
indicates an orientation)

▧ Target object

201

204

203

Lane 1

Lane 2

FIG. 2

FIG. 3

FIG. 4

FIG. 5

FIG. 6

North

North

VI

I

V

II

West

East

IV

III

South

FIG. 7

North

IV

I

30°

60°

30°

Overlapping area

Non-overlapping area

III

II

FIG. 8

Up

North

East

FIG. 9

Total available frequency band

Overlapping area

Overlapping area

Overlapping area

$f_0$

Frequency $f$

Frequency band 1

Frequency band 2

Frequency band 3

Frequency band 4

FIG. 10

Total available frequency band

Frequency $f$

| Frequency band 1 | Frequency band 2 | Frequency band 3 | Frequency band 4 |

FIG. 11

Total available frequency band

$a_1$   $a_2$   $a_3$   $a_4$   $a_5$

Frequency $f$

Frequency band 1   Frequency band 2   Frequency band 3   Frequency band 4

FIG. 12

(A)

(B)

FIG. 13

EP 4 657 759 A1

FIG. 14

FIG. 15

North

VI
Frequency band 6

I
Frequency band 1

V
Frequency band 4

II
Frequency band 2

West

East

IV
Frequency band 5

III
Frequency band 3

South

(A)

Total frequency band

Overlapping area

Overlapping area

Overlapping area

Overlapping area

Overlapping area

Frequency $f$

Frequency band 1

Frequency band 2

Frequency band 3

Frequency band 4

Frequency band 5

Frequency band 6

(B)

FIG. 16

EP 4 657 759 A1

FIG. 17

FIG. 18

FIG. 19

FIG. 20

North

IV
Frequency band 3
Time period 4

I
Frequency band 1
Time period 1

West

East

III
Frequency band 4
Time period 3

II
Frequency band 2
Time period 2

South

FIG. 21

North

IV
Frequency band 3
Time period 1

I
Frequency band 1
Time period 1

West

East

III
Frequency band 4
Time period 2

II
Frequency band 2
Time period 2

South

FIG. 22

0° (360°)

| Polarization direction range 4 | Polarization direction range 1 |

270° ← ○ → 90°

| Polarization direction range 3 | Polarization direction range 2 |

180°

FIG. 23

North

| IV | I |
| Polarization direction range 3 | Polarization direction range 1 |

West — — East

| III | II |
| Polarization direction range 4 | Polarization direction range 2 |

South

FIG. 24

North

IV

Frequency band 3

Time period 4

Polarization
direction range 4

I

Frequency band 1

Time period 1

Polarization
direction range 1

West

East

III

Polarization
direction range 3

Frequency band 4

Time period 3

II

Polarization
direction range 2

Frequency band 2

Time period 2

South

FIG. 25

S2601: Determine, based on an orientation of a detection apparatus, a first available
frequency band for transmitting a signal

S2602: Transmit a signal on the first available frequency band

FIG. 26

EP 4 657 759 A1

North

North

IV
Frequency
band 4

I
Frequency
band 1

West

East

III
Frequency
band 3

II
Frequency
band 2

South

North

IV
Frequency
band 4

I
Frequency
band 1

West

East

III
Frequency
band 3

II
Frequency
band 2

South

North

IV
Frequency
band 4

I
Frequency
band 1

West

East

III
Frequency
band 3

II
Frequency
band 2

South

FIG. 27

EP 4 657 759 A1

2802

North

West ✚ East

South

Detection apparatus (a white opening indicates an orientation)

Target object

2801

2805  2806

2804

2803

2807

Lane 1

Lane 2

Lane 3

FIG. 28

53

FIG. 29

EP 4 657 759 A1

North

IV
Frequency
band 3

I
Frequency
band 1

West

East

III
Frequency
band 4

II
Frequency
band 2

South

(A)

Angle margin

Orientation A

(B)

Angle margin

Orientation B

(C)

FIG. 30

S3101: Determine, based on an orientation of a detection apparatus, a first available time period for transmitting a signal

S3102: Transmit a signal in the first available time period

FIG. 31

FIG. 32

FIG. 33

S3401: Determine, based on an orientation of a detection apparatus, a first available polarization direction range for transmitting a signal

S3402: Transmit a signal in the first available polarization direction range

FIG. 34

EP 4 657 759 A1

FIG. 35

60

Signal transmission apparatus 360

3601                    3602

Processing          Transmitting
module                module

FIG. 36

Processor 3701              Communication
                           interface 3702

Connection          Memory 3703
line 3704

Signal transmission apparatus 370

FIG. 37

## INTERNATIONAL SEARCH REPORT

| International application No. |
|---|
| **PCT/CN2023/077515** |

| A. | CLASSIFICATION OF SUBJECT MATTER |
|---|---|

H04B1/02(2006.01)i;  G01S13/931(2020.01)i

According to International Patent Classification (IPC) or to both national classification and IPC

| B. | FIELDS SEARCHED |
|---|---|

Minimum documentation searched (classification system followed by classification symbols)

IPC:G01S7/-; H04B1/-; G01S13/-

Documentation searched other than minimum documentation to the extent that such documents are included in the fields searched

Electronic data base consulted during the international search (name of data base and, where practicable, search terms used)

CNABS, CNTXT, ENTXTC, CNKI, 百度文库, BAIDU WENKU: 朝向, 车辆, 发射, 方位, 方向, 干扰, 可用, 雷达, 碰撞, 频带, 频段, 探测, 虚警, 重叠, 频率, 时段, 车载, 无人驾驶 VEN, USTXT, EPTXT, WOTXT, IEEE, 3GPP: orientation, radar, probe, detect, transmit, unmanned, frequency, band, vehicle, collision, crash, false-alarm, interference

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 113030974 A (HUAWEI TECHNOLOGIES CO., LTD.) 25 June 2021 (2021-06-25) description, paragraphs [0044]-[0161] | 1-5, 7-13, 16, 19-23, 25-31, 34, 37-42 |
| Y | CN 112394326 A (HUAWEI TECHNOLOGIES CO., LTD.) 23 February 2021 (2021-02-23) description, paragraphs [0121]-[0131] | 1-5, 7-13, 16, 19-23, 25-31, 34, 37-42 |
| A | US 2007200747 A1 (HITACHI, LTD.) 30 August 2007 (2007-08-30) entire document | 1-42 |
| A | US 2016223644 A1 (PANASONIC INTELLECTUAL PROPERTY MANAGEMENT CO., LTD.) 04 August 2016 (2016-08-04) entire document | 1-42 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 October 2023** | **24 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2023/077515** |

| Patent document cited in search report | | | Publication date (day/month/year) | Patent family member(s) | | | Publication date (day/month/year) |
|---|---|---|---|---|---|---|---|
| CN | 113030974 | A | 25 June 2021 | WO | 2021129069 | A1 | 01 July 2021 |
| | | | | EP | 4071509 | A1 | 12 October 2022 |
| | | | | US | 2022326345 | A1 | 13 October 2022 |
| | | | | EP | 4071509 | A4 | 13 October 2022 |
| CN | 112394326 | A | 23 February 2021 | WO | 2021032000 | A1 | 25 February 2021 |
| | | | | BR | 112022002844 | A2 | 10 May 2022 |
| | | | | US | 2022171055 | A1 | 02 June 2022 |
| | | | | IN | 202217011558 | A | 10 June 2022 |
| | | | | EP | 4016117 | A1 | 22 June 2022 |
| | | | | EP | 4016117 | A4 | 17 August 2022 |
| US | 2007200747 | A1 | 30 August 2007 | JP | 2007232498 | A | 13 September 2007 |
| | | | | EP | 1826586 | A1 | 29 August 2007 |
| | | | | US | 7522092 | B2 | 21 April 2009 |
| US | 2016223644 | A1 | 04 August 2016 | US | 10139473 | B2 | 27 November 2018 |
| | | | | JP | 2016145818 | A | 12 August 2016 |

Form PCT/ISA/210 (patent family annex) (July 2022)